# EUROPÄISCHE PATENTSCHRIFT

(11) **EP 3 064 806 B1**
(45) Veröffentlichungstag und Bekanntmachung des Hinweises auf die Patenterteilung: **02.09.2020**
(21) Anmeldenummer: 16157654.1
(22) Anmeldetag: 26.02.2016
(51) Int. Cl.: F16H 29/16, F16H 57/04

(54) **STUFENLOSES GETRIEBE**
CONTINUOUSLY VARIABLE TRANSMISSION
ENGRENAGE CONTINU

(30) Priorität: 04.03.2015 DE 102015002680
(43) Veröffentlichungstag der Anmeldung: 07.09.2016
(73) Patentinhaber: UMS Maschinenbau GmbH, 86825 Bad Wörishofen (DE)
(72) Erfinder: Kobler, Peter, 93059 Regensburg (DE)
(74) Vertreter: Bittner, Bernhard

(56) Entgegenhaltungen:
- WO-A1-2012/105482
- WO-A1-2013/128278
- DE-A1-102009 057 292
- DE-A1-102013 008 495

## Beschreibung

Die Erfindung bezieht sich auf ein stufenloses Getriebe. Ein Getriebe, bei welchem eine Drehzahl eines Drehteils in eine Drehzahl eines anderen Drehteils gewandelt wird, kann auch als stufenloses Getriebe ausgebildet sein. Bei einem solchen ist das Übersetzungsverhältnis der Drehzahlen in einem vorgegebenen Bereich kontinuierlich variabel.
Stufenlose Getriebe sind beispielsweise aus der DE 102 34 463 A1 oder der DE 36 05 211 A1 bekannt, welche jeweils nur geringe Drehmomente zulassen.

Aus der WO 2013/128278 A1 ist ein stufenloses Getriebe zur Übertragung einer relativen Drehbewegung zwischen einem ersten Drehteil auf ein zweites Drehteil bekannt, wobei beide Drehteile um zueinander parallele Drehachsen rotieren können und deren Lagermodule derart mit einem Chassis oder Gehäuse des Getriebes verbunden sind, dass der Abstand zwischen den beiden zueinander parallelen Drehachsen variabel ist. Zur Kopplung des inneren und des äußeren Drehteils sind dabei mehrere Koppelmechaniken vorgesehen.

Zur Lösung dieses Problems, hat der Erfinder der vorliegenden Anmeldung ein stufenloses Getriebe entwickelt, bei welchem sich ein äußeres Drehteil oder ein inneres Drehteil um zueinander parallele Drehachsen drehen können, die exzentrisch zueinander versetzbar sind. Ein solches stufenloses Getriebe ist für größere Drehmomente als bei dem Stand der Technik geeignet. Hierbei besteht jedoch der Bedarf, das stufenlose Getriebe für den Langzeitbetrieb zu optimieren bzw. seine Lebensdauer zu erhöhen.

Daher ist es Aufgabe der vorliegenden Erfindung, ein stufenloses Getriebe bereitzustellen, welches die Probleme des Standes der Technik löst. Insbesondere soll ein stufenloses Getriebe bereitgestellt werden, bei welchem hohe Drehmomente in der Größenordnung von ca. 100 Nm bis zu mehreren Mega-Nm im Langzeitbetrieb möglich sind.

Die Aufgabe wird durch ein stufenloses Getriebe mit den Merkmalen von Patentanspruch 1 gelöst. Das stufenlose Getriebe umfasst ein äußeres Drehteil, ein inneres Drehteil, das in dem äußeren Drehteil derart angeordnet ist, dass das innere und/oder das äußere Drehteil relativ zueinander drehbar sind, mehrere Koppelmechaniken zur Kopplung des inneren und äußeren Drehteils miteinander, eine Verstelleinrichtung zur exzentrischen Verstellung des inneren und äußeren Drehteils relativ zueinander.

Erfindungsgemäß weist das stufenlose Getriebe mindestens eine erste Schmierstoffführungseinrichtung zum Führen wenigstens eines Teils eines Schmierstoffs von der Mantelfläche des inneren Drehteils zu einem in Bezug auf die Drehachse des inneren Drehteils radial weiter außen liegenden Bereich einer Koppelmechanik auf. Bei diesem weiter außen liegenden Bereich einer Koppelmechanik handelt es sich damit insbesondere nicht um einen dem inneren Drehteil am nächsten liegenden Bereich dieser Koppelmechanik.

Damit ist bevorzugt mittels einer derartigen Schmierstoffführungseinrichtung nicht nur ein Bereich der Koppelmechanik mit Schmierstoff versorgbar, der dem inneren Drehteil am nächsten liegt und welcher bevorzugt direkt über eine Schmierstoffförderung entlang der Mantelfläche des inneren Drehteils versorgbar ist, sondern auch ein Bereich der Koppelmechanik, welcher in Bezug auf die Drehachse des inneren Drehteils radial weiter außen als dieser Bereich liegt.

Besonders bevorzugt handelt es sich bei dem weiter außen liegenden Bereich einer Koppelmechanik um ein Periphärgelenk oder um eine Lagerstelle der Koppelmechanik. Bei einer im Wesentlichen zweiteiligen Ausgestaltung einer Koppelmechanik kann es sich beispielsweise bei dieser Lagerstelle um eine sogenannte erste Lagerstelle zwischen den beiden Teilen der Koppelmechanik handeln, in welcher über ein sogenanntes inneres Koppellager die beiden Teile der Koppelmechanik aneinander gekoppelt bzw. gelagert sind.

In einer bevorzugten Ausführungsform weist das stufenlose Getriebe eine Pumpe zum Fördern eines Schmierstoffs in das Getriebe entlang einer Mantelfläche des inneren Drehteils auf.

In einer weiteren bevorzugten Ausführungsform weist das stufenlose Getriebe Dichtelemente, die an dem inneren Drehteil bei den Koppelmechaniken angeordnet sind, oder Düsen zum Fördern einer vorbestimmten Menge an Schmierstoff an die jeweilige Koppelmechanik auf.

Bevorzugt ist zwischen dem inneren Drehteil und einer bzw. jeder einzelnen Koppelmechanik ein Ringspalt ausgebildet, so dass Schmierstoff entlang einer Mantelfläche des inneren Drehteils strömen kann.

Bevorzugt handelt es sich bei der ersten Schmierstoffführungseinrichtung um eine abgeschlossene Führungseinrichtung, so dass bevorzugt Schmierstoff im Wesentlichen verlustfrei von der Mantelfläche des inneren Drehteils zu einem in Bezug auf die Drehachse des inneren Drehteils radial weiter außen liegenden Bereich einer Koppelmechanik geführt werden kann.

Bevorzugt befindet sich die erste Schmierstoffführungseinrichtung zumindest teilweise, besonders bevorzugt vollständig, innerhalb der Koppelmechanik. Besonders bevorzugt ist die Schmierstoffführungseinrichtung durch eine Bohrung in der Koppelmechanik realisiert. Vorteilhaft befindet sich eine Aufnahmeöffnung der Schmierstoffführungseinrichtung zwischen zwei Lagerelementen, bevorzugt zwischen zwei Wälzlagern, mithilfe derer die Koppelmechanik wenigstens teilweise an dem inneren Drehteil gelagert ist. Bevorzugt ist eine Abführöffnung der Schmierstoffführungseinrichtung an einer Lagerstelle der Koppelmechanik vorgesehen, welche bezüglich der Drehachse des inneren Drehteils radial weiter außen liegt als die Lagerung zumindest eines Teils der Koppelmechanik an dem inneren Drehteil. Damit kann vorteilhaft auch diese weiter außen liegende, bevorzugt erste, Lagerstelle der Koppelmechanik mit Schmierstoff aus einem Schmierstofffluss entlang der Mantelfläche des inneren Drehteils versorgt werden.

Bevorzugt befindet sich wenigstens ein Teil der ersten Schmierstoffführungseinrichtung außerhalb der Koppelmechanik, von der wenigstens ein weiter außenliegender Bereich mit Schmierstoff versorgt werden soll. In diesem Falle kann sich die Abführöffnung der Schmierstoffversorgungseinrichtung vorteilhaft an einem Lagerelement, bevorzugt an einem Wälzlagerelement, mithilfe dessen wenigstens ein Teil der Koppelmechanik an einem wenigstens anderen Teil der Koppelmechanik gelagert ist, befinden. Besonders bevorzugt ist dabei die erste Schmierstoffführungseinrichtung durch ein Dichtungselement geführt, welches den weiter radial außen befindlichen Bereich der Koppelmechanik, welchem Schmierstoff zugeführt werden soll, hinsichtlich eines Schmierstoffverlusts gegenüber dem Innenraum des äußeren Drehteils abdichtet. Vorteilhaft ist die erste Schmierstoffführungseinrichtung zumindest teilweise entlang einer Außenwandung wenigstens eines Teils der Koppelmechanik angeordnet. Bevorzugt ist die erste Schmierstoffführungseinrichtung zumindest teilweise, bevorzugt im Wesentlichen vollständig, als rohrförmiger Körper etwa als Röhrchen ausgestaltet.

Denkbar wäre auch, dass zwei erste Schmierstoffführungseinrichtungen zum Führen wenigstens eines Teils des Schmierstoffs von der Mantelfläche des inneren Drehteils zu einem in Bezug auf die Drehachse des inneren Drehteils radial weiter außen liegenden Bereich einer Koppelmechanik vorgesehen sind, wobei eine erste Schmierstoffführungseinrichtung im Inneren der Koppelmechanik vorgesehen ist und sich die andere erste Schmierstoffführungseinrichtung zumindest teilweise außerhalb der Koppelmechanik befindet.

In einer weiteren bevorzugten Ausführungsform ist für jede Koppelmechanik eine erste Schmierstoffführungseinrichtung zum Führen wenigstens eines Teils des Schmierstoffs von der Mantelfläche des inneren Drehteils zu einem in Bezug auf die Drehachse des inneren Drehteils radial weiter außen liegenden Bereich einer Koppelmechanik vorgesehen.

In einer weiteren bevorzugten Ausführungsform weist mindestens eine Koppelmechanik eine zweite Schmierstoffführungseinrichtung zum Führen von Schmierstoff von einem in Bezug auf die Drehachse des inneren Drehteils radial weiter außen liegenden Bereich dieser Koppelmechanik zu einer sogenannten zweiten Lagerstelle, an der wenigstens mittels eines äußeren Koppellagers ein Teil der Koppelmechanik an dem äußeren Drehteil gelagert ist, auf. Bei besagtem radial weiter außen liegenden Bereich handelt es sich bevorzugt um eine erste Lagerstelle bzw. um das innere Koppellager, bei der bzw. bei dem besonders bevorzugt im Falle einer zweiteiligen Ausgestaltung der Koppelmechanik wenigstens ein Teil der Koppelmechanik an einem anderen Teil der Koppelmechanik gelagert ist.

Denkbar ist dabei, dass eine zweite Schmierstoffführungseinrichtung auch unabhängig von dem Vorhandensein einer ersten Schmierstoffstoffführungseinrichtung vorhanden sein kann. Bevorzugt ist allerdings sowohl eine erste als auch eine zweite Schmierstoffführungseinrichtung in wenigstens einer Koppelmechanik vorhanden.

Bevorzugt handelt es sich auch bei der zweiten Schmierstoffführungseinrichtung um eine abgeschlossene Führungseinrichtung, so dass bevorzugt Schmierstoff im Wesentlichen verlustfrei von einem radial weiter außen liegenden Bereich einer Koppelmechanik zu der zweiten Lagerstelle der Koppelmechanik geführt werden kann.

Bevorzugt befindet sich die zweite Schmierstoffführungseinrichtung zumindest teilweise, besonders bevorzugt vollständig, innerhalb der Koppelmechanik. Besonders bevorzugt ist die Schmierstoffführungseinrichtung durch eine Bohrung in der Koppelmechanik realisiert. Vorteilhaft befindet sich eine Aufnahmeöffnung der zweiten Schmierstoffführungseinrichtung bei einem Lagerelement eines inneren Koppellagers an der ersten Lagerstelle der Koppelmechanik. Besonders vorteilhaft ist dabei die zweite Schmierstoffführungseinrichtung durch ein Dichtungselement des inneren Koppellagers hindurchgeführt. Ein derartiges Dichtungselement kann dabei an dem inneren Koppellager vorgesehen sein, um dieses hinsichtlich eines Schmierstoffverlusts gegenüber dem Innenraum des äußeren Drehteils abzudichten. Vorteilhaft befindet sich eine Abführeinrichtung der zweiten Schmierstoffführungseinrichtung zwischen zwei Lagerelementen der zweiten Lagerstelle, also des äußeren Koppellagers, mittels welchen wenigstens ein Teil der Koppelmechanik an dem äußeren Drehteil gelagert ist.

Bevorzugt befindet sich wenigstens ein Teil der zweiten Schmierstoffführungseinrichtung außerhalb der Koppelmechanik, von der die zweite Lagerstelle mit Schmierstoff versorgt werden soll. In diesem Falle kann sich die Abführöffnung der Schmierstoffversorgungseinrichtung vorteilhaft an einem Lagerelement, bevorzugt an einem Wälzlagerelement, mithilfe dessen wenigstens ein Teil der Koppelmechanik an dem äußeren Drehteil gelagert ist, befinden. Vorteilhaft ist die zweite Schmierstoffführungseinrichtung zumindest teilweise entlang einer Außenwandung wenigstens eines Teils der Koppelmechanik angeordnet. Bevorzugt ist die zweite Schmierstoffführungseinrichtung zumindest teilweise, bevorzugt im Wesentlichen vollständig, als rohrförmiger Körper, etwa als Röhrchen, ausgestaltet.

Bevorzugt weisen alle Koppelmechaniken des stufenlosen Getriebes eine zweite Schmierstoffführungseinrichtung auf, besonders bevorzugt zusätzlich zu einer ersten Schmierstoffführungseinrichtung.

Bevorzugt ist an einem äußeren Koppellager einer Koppelmechanik, welches obig als zweite Lagerstelle bezeichnet wurde und an welchem wie oben beschrieben wenigstens ein Teil einer Koppelmechanik an dem äußeren Drehteil gelagert ist, kein Dichtungselement angeordnet, welches einen Schmierstoffaustritt aus dem äußeren Koppellager in den Innenraum des äußeren Drehteils verhindern soll. Im Gegenteil ist ein derartiger Schmierstoffaustritt in den Innenraum des äußeren Drehteils sogar erwünscht, um nämlich hiermit einen Abfluss des Schmierstoffs und damit einen Abtransport eventueller Schmutzteilchen aus dem Koppellager zu ermöglichen.

Besonders bevorzugt weist im Falle einer wenigstens zweiteiligen Form einer Koppelmechanik ein inneres Koppellager, welches obig als erste Lagerstelle bezeichnet wurde und an welchem ein wenigstens erster Teil der Koppelmechanik an einem wenigstens zweiten Teil der Koppelmechanik gelagert ist, wenigstens ein Dichtungselement, bevorzugt zwei Dichtungselemente und besonders bevorzugt Dichtungsringe auf, durch welches bzw. welche ein eventueller Schmierstoffaustritt aus dem inneren Koppellager in den Innenraum des äußeren Drehteils verhindert werden kann.

Mit dem stufenlosen Getriebe kann auch bei hohen Drehzahlen und/oder Drehmomenten ein laufruhiger Betrieb des stufenlosen Getriebes realisiert werden. Zudem ist die Lebensdauer des stufenlosen Getriebes gegenüber bisherigen Ausgestaltungen des Standes der Technik verbessert.

Durch eine leichtgewichtige und kostengünstige Ausgestaltung des Getriebes können zudem die Betriebseigenschaften verbessert und die Herstellungskosten gesenkt werden.

Vorteilhafte weitere Ausgestaltungen der Erfindung sind den abhängigen Patentansprüchen dargelegt.

In einer vorteilhaften Ausführungsform umfasst das stufenlose Getriebe zudem ein Gehäuse zur Aufnahme des stufenlosen Getriebes, wobei besonders bevorzugt die Pumpe zum Fördern des Schmierstoffes in einem Kreislauf in das und/ oder aus dem Gehäuse angeordnet ist.

Gemäß einer weiteren vorteilhaften Variante weist das äußere Drehteil Scheiben auf, welche durch Lagerbolzen für die Koppelmechaniken beabstandet sind.

Gemäß einer weiteren vorteilhaften Ausführungsform weist das äußere Drehteil zwei aneinander befestigte Hülsen auf, welche durch Lagerbolzen für die Koppelmechaniken beabstandet sind.

Bei einer weiteren vorteilhaften Ausführungsform bei dem stufenlosen Getriebe weist eine der Koppelmechaniken ein inneres Koppelmodul, welches an dem inneren Drehteil angeordnet ist, und ein äußeres Koppelmodul auf, welches an dem äußeren Drehteil angeordnet ist, wobei besonders bevorzugt das innere Koppelmodul einen Masseausgleichsbolzen zum Ausgleich einer Masse eines Lagerbolzens mindestens eines Koppelmoduls, bevorzugt genau eines Koppelmoduls und besonders bevorzugt des inneren Koppelmoduls oder des äußeren Koppelmoduls aufweist, mit welchem Lagerbolzen das innere und äußere Koppelmodul dreh/schwenkbar, ähnlich eines Kniegelenks, aneinander befestigt sind.

Bevorzugt weist eine Koppelmechanik des stufenlosen Getriebes, wie bereits obig beschrieben, ein inneres Koppellager auf, welches als erste Lagerstelle bezeichnet wird und an welchem das innere Koppelmodul an dem äußeren Koppelmodul gelagert ist. Analog hierzu ist bevorzugt das äußere Koppelmodul durch das äußere Koppellager an der zweiten Lagerstelle an dem äußeren Drehteil gelagert. Damit kann bevorzugt eine erste Schmierstoffführungseinrichtung innerhalb und/oder an der Außenwandung eines inneren Koppelmoduls vorgesehen sein und vorteilhaft eine zweite Schmierstoffführungseinrichtung innerhalb und/oder an der Außenwandung eines äußeren Koppelmoduls vorgesehen sein.

Zudem weist bei einer weiteren vorteilhaften Ausführungsform das innere Koppelmodul mindestens einen Schlitz zur Aufnahme von mit Vorspannung laminierend aufgewickelten Carbonfasern auf.

Bei einer weiteren vorteilhaften Ausführungsform weist das innere Drehteil mindestens ein aufgewickeltes Blech auf. Besonders bevorzugt ist hierbei das mindestens eine aufgewickelte Blech in einem Rohr angeordnet.

Bei dem stufenlosen Getriebe ist in einer weiteren vorteilhaften Ausführungsform ein unteres Ende eines Klemmkörpers konkav ausgebildet, wobei der Klemmkörper zur Lagerung einer der Koppelmechaniken an dem inneren Drehteil dient. Durch diese Ausbildung kann die Lebensdauer erhöht werden, da auch bei einer gewissen Materialabtragung noch ein zuverlässiger Kontakt mit dem Klemmkörper besteht. Bevorzugt ist die entsprechend andere Kontaktfläche des Klemmkörpers, die sich an dem oberen Ende des Klemmkörpers befindet, konvex ausgebildet.

Bevorzugt ist die innere Kontaktfläche, also die Kontaktfläche des Klemmkörpers in Richtung des inneren Drehteils, konkav und die äußere Kontaktfläche, also die Kontaktfläche des Klemmkörpers in Richtung des äußeren Drehteils, konvex ausgebildet. Bevorzugt kann der Verlauf wenigstens einer Kontaktfläche einer logarithmischen Spirale folgen.

Darüber hinaus ist in einer weiteren vorteilhaften Ausführungsform bei dem stufenlosen Getriebe eine Lagerstelle für ein Verstellelement der Verstelleinrichtung in axialer Richtung mittig an einem Lager- und Führungsmodul angeordnet, welches zur Lagerung des äußeren Drehteils dient.

Bei einer weiteren vorteilhaften Ausführungsform sind das äußere und innere Koppelmodul um einen Winkel gegeneinander verschwenkbar und besonders bevorzugt ist dieser Winkel stets kleiner als 180°. Dadurch kann die Koppelmechanik nicht umklappen.

Bevorzugt schließen die geometrische Verbindung zwischen dem Mittelpunkt des inneren Drehteils und einer ersten Anlenkung des inneren Koppelmoduls einerseits und die geometrische Verbindung zwischen der ersten Anlenkung des inneren Koppelmoduls und einer zweiten Anlenkung des äußeren Koppelmoduls andererseits einen Winkel ein, der kleiner als 180°, bevorzugt kleiner als 179°, 178°, 177°, 176° oder 175° ist. Bevorzugt ist eben genannter Winkel, vorteilhaft zusätzlich zu obiger maximaler Begrenzung, größer als 20° und besonders bevorzugt größer als 30°. Dabei entspricht der ersten Anlenkung des inneren Koppelmoduls bevorzugt die Gelenkachse, bei welcher das innere und das äußere Koppelmodul schwenkbar miteinander verbunden sind, beispielsweise ein Lagerbolzen, und besonders bevorzugt entspricht der ersten Anlenkung des inneren Koppelmoduls das Lager, das als inneres Lager für das äußere Koppelmodul und als äußeres Lager für das innere Koppelmodul dient. Die zweite Anlenkung des äußeren Koppelmoduls entspricht bevorzugt dem Lager, das als äußeres Lager für das äußere Koppelmodul dient.

Bei einer weiteren vorteilhaften Ausführungsform ist die Exzentrizität der Koppelmechanik und/oder des äußeren Drehteils relativ zum inneren Drehteil und/oder die Schwenkbarkeit mit der Verstelleinrichtung mit Anschlägen begrenzt. Bevorzugt erfolgt dies durch Anschläge in der Koppelmechanik, besonders bevorzugt durch eine Begrenzung der relativen Schwenkbarkeit zwischen dem inneren und äußeren Koppelmodul.

Bei einer weiteren vorteilhaften Ausführungsform ist die Exzentrizität der Koppelmechanik zwischen dem Gehäuse und einem Lager- und Führungsmodul, welches zur Lagerung des äußeren Drehteils dient, mit Anschlägen begrenzt.

Bei einer weiteren vorteilhaften Ausführungsform sind in den Gelenkachsen von einem äußeren Lager für das äußere Koppelmodul und/oder von einem Lager, das als inneres Lager für das äußere Koppelmodul und als äußeres Lager für das innere Koppelmodul dient, Anschläge der Koppelmechanik gebildet.

Bei einer weiteren vorteilhaften Ausführungsform umfassen jeweils das äußere Lager für das äußere Koppelmodul und das andere Lager, das als inneres Lager für das äußere Koppelmodul und als äußeres Lager für das innere Koppelmodul dient, jeweils zwei Teile, welche bevorzugt als zwei miteinander drehbar oder starr verbundene Lager ausgestaltet sind.

Durch eine derart ausgestaltete Koppelmechanik wird die Sinusfunktion einer Bewegung der Koppelmechanik derart verformt, dass sie sich dem Ideal einer Rechteckfunktion annähert. Dadurch wird eine gleichförmige Drehbewegung am Abtrieb erhalten.

Bevorzugt bewegen sich die inneren und äußeren Koppelmodule nicht um einen Drehpunkt, sondern um zwei Drehpunkte. Besonders bevorzugt ist jeweils der Winkel zwischen den beiden Teilen des äußeren Lagers und des anderen Lagers konstant.

In einer weiteren vorteilhaften Ausführungsform ist bei dem stufenlosen Getriebe ein Schwingungserzeuger mit einem Differenzialgetriebe verschaltet. Bevorzugt ist dieses durch ein Planetenradgetriebe realisiert. Besonders bevorzugt ist darin das Drehzahlverhältnis des Sonnenrads, welches bevorzugt mit dem Abtrieb des Schwingungserzeugers verbunden ist, zu dem Hohlrad gleich 5:1. Bevorzugt wird unter einem Schwingungserzeuger das innere bzw. das äußere Drehteil oder aber die Koppelmechanik/en verstanden.

Bei einer weiteren vorteilhaften Ausführungsform besteht ein Schmierstoffstrom in axialer Richtung entlang der Mantelfläche des inneren Drehteils. Besonders bevorzugt ist eine Schmierstoffversorgung zwischen dem inneren Drehteil und den Koppelmechaniken, vorteilhaft zwischen dem inneren Drehteil und dem/den inneren Koppelmodul/en, vorgesehen.

Bevorzugt kann eine aktive Schmierstoffversorgung ohne kontrollierten Schmierstoffverlust vorgesehen sein. Dabei wird der Schmierstoff- bzw. Ölfluss bevorzugt derart geführt, dass Dichtungsringe zwischen den beiden Stutzen der feststehenden Gehäusedeckel, welche bevorzugt in axialer Richtung der Drehachse des äußeren Drehteils versetzt zueinander angeordnet sind und zwischen welchen sich vorteilhaft die Koppelmechaniken befinden, und den dazwischen liegenden Kupplungshebeln bzw. Koppelmechaniken derart angebracht sind, so dass kein unkontrollierter Schmierstoff- bzw. Ölaustritt möglich ist. Der flüssige Schmierstoff wird somit bevorzugt von einem Gehäusedeckel ausgehend entlang der Mantelfläche, besonders bevorzugt des inneren Drehteils, durch die innere Kupplungsmechanik in Richtung des zweiten Gehäusedeckels gepumpt bzw. gefördert. Schließlich kann bevorzugt der Schmierstoff bzw. das Öl über die Lagerung des inneren Drehteils mittels einer Überlaufbohrung in das Getriebegehäuse laufen und gesammelt werden.

Zusätzliche Lagerstellen können bevorzugt direkt über eine separate Schmierstoff- bzw. Ölleitung der Schmierstoff- bzw. Ölpumpe mit Schmierstoff versorgt werden. Als zusätzliche Maßnahmen können Spritzdüsen am Gehäuse fest angebracht sein, die in das Innere des Getriebes spritzen und sämtliche Funktionsteile mit Schmierstoff versorgen. Das innere und äußere Lager der Koppelmechanik werden dabei in dieser Variante einer Schmierstoffversorgung noch nicht direkt mit Schmierstoff bzw. Öl versorgt. Es findet damit eine indirekte Schmierung über Ölzulaufbohrungen der Lagerung statt.

Die Anmelderin hat nun in aufwändigen Versuchsreihen herausgefunden, dass besonders vorteilhaft die Schmierstoff- bzw. Ölversorgung der Lagerung der Koppelmechaniken direkt ausgehend von der Schmierstoffversorgung des Mantelbereichs des inneren Drehteils erfolgt. Es wird bevorzugt eine Verbindung zwischen der Bohrung des Kupplungshebels bzw. des inneren Koppelmoduls und der ersten Lagerstelle, sowie zwischen der ersten Lagerstelle und der zweiten Lagerstelle in Form einer Bohrung und/oder Kanals, bevorzugt des äußeren Koppelmoduls, hergestellt. Die Zentrifugalkraft der umlaufenden Koppelmechanik transportiert den Schmierstoff bzw. das Öl aus dem Ringspalt zwischen innerem Drehteil und Bohrung des Kupplungshebels bzw. inneren Koppelmoduls wie gewünscht zu den Lagerstellen. Der Vorteil dieser Maßnahme liegt in einer hervorragenden Schmiermittelversorgung und Kühlung, sowie dem Abtransport von Partikeln die durch Verschleiß entstehen. Die betroffene Lagerung kann offen, etwa mit schmierstoff- bzw. ölabführenden Nuten ausgestattet sein und/oder bevorzugt mit Dichtungen versehen sein. Empfehlenswert ist, die erste Lagerstelle abzudichten und bevorzugt die zweite Lagerstelle "offen" zu gestalten. Dies bedeutet, dass vorteilhaft das geförderte Öl bzw. der geförderte Schmierstoff erst an der zweiten Lagerstelle austreten kann.

Es können bevorzugt zusätzlich Düsen angebracht sein, die die Funktionselemente wie z.B. die Lagerung des äußeren Drehteils und/oder Zahnräder oder Ketten gezielt mit Schmierstoff versorgen.

In einer Variante einer Schmierstoffversorgung wird eine passive Schmierstoffversorgung mit kontrolliertem Ölverlust verwendet. Dabei sind die einzelnen Koppelmechaniken nicht mit Dichtungsringen ausgestattet, somit tritt kontrolliert Öl zwischen den Kupplungshebeln, bzw. den inneren Koppelmodulen, und den Gehäusedeckeln in das Innere des äußeren Drehteils aus und schmiert passiv die Koppelmechaniken, deren Lagerstellen über Schmierstoffbohrungen verfügen. Diese sind in der Regel relativ klein, womit ein geringer Öldurchsatz möglich ist.

Um mehr Schmierstoff in die Lagerstellen zu bekommen hat die Anmelderin herausgefunden, dass die Befestigung von trichterförmigen Elementen auf die Schmierstoffbohrung, bevorzugt auf alle Öffnungen der Schmierstoffbohrungen, vorteilhaft ist, so dass ein höherer Schmierstoffdurchsatz ermöglicht wird. Bevorzugt sind dabei die trichterförmigen Elemente in radialer Richtung zur Drehachse des inneren Drehteils hin ausgerichtet, so dass die trichterförmigen Elemente jeweils eine möglichst große Querschnittsfläche bezüglich der tangential von der Mantelfläche des inneren Drehteils in das Innere des äußeren Drehteils aufgrund der Fliehkraft beschleunigten Schmierstoffpartikel aufweisen. Bevorzugt kann vorteilhaft ein derartiges trichterförmiges Element über eine Absenkung der Schmierstoffbohrung und/oder eine Rille bzw. einer (dicken) Nut, die an der Oberfläche der Lagerstelle hin zu der Schmierstoffbohrung erstreckt, realisiert werden.

Es ist auch möglich, die erfindungsgemäße Schmierstoffversorgung auf herkömmliche stufenlose Getriebe zu übertragen.

In einer weiteren bevorzugten Ausführungsform weist das stufenlose Getriebe eine Schmierstoff- bzw. Ölpumpe zum Ansaugen des Schmierstoffs aus einem Schmierstoff- bzw. Ölsumpf und zum Fördern des Schmierstoffes entlang der Mantelfläche des inneren Drehteiles auf.

Bevorzugt ist dieser Pumpe ein Schmierstoff- bzw. Ölfilter vorgeschaltet. Die Anmelderin behält sich vor, auch diese Erfindung im Rahmen einer Teilanmeldung zu beanspruchen.

Besonders bevorzugt ist die Pumpe in einem Betriebszustand des stufenlosen Getriebes an der Unterseite des, vorteilhaft langgestreckten zylindrischen, Getriebegehäuses angeordnet bzw. befestigt. Wenn das Getriebe horizontal ausgerichtet ist, so funktioniert die Ölversorgung, weil der Schmierstoff im Sumpf angesaugt werden kann. Verschwenkt man das Getriebe derart, dass Antriebswelle und Abtriebswelle vertikal stehen, so richtet sich der Schmierstoff- bzw. Ölsumpf entsprechend der Schwerkraft aus. Dann besteht die Gefahr, dass die Pumpe Luft saugt und die Schmierstoffversorgung versagt.

Dem kann bevorzugt begegnet werden, indem man unter dem Schmierstoff- bzw. Ölsumpf die Ansaugbohrung platziert und darunter liegend Schmierstoff- bzw. Ölfilter und/oder Schmierstoff- bzw. Ölpumpe anbringt. Bevorzugt ist damit eine Schmierstoffabführung aus dem Schmierstoffsumpf unterhalb des Schmierstoffsumpfs angeordnet.

Die Anmelderin behält sich vor, auch diese Erfindung im Rahmen einer Teilanmeldung zu beanspruchen.

Eine andere bevorzugte Möglichkeit ist, eine Schmierstoff- bzw. Ölleitung mit Fußventil im Sumpfbereich derart, das heißt bevorzugt unter dem Schmierstoffsumpf, zu platzieren und mit der Saugseite der Ölpumpe zu verbinden. Damit wird bevorzugt das Ansaugen von Luft verhindert. Somit spielt die Position von Schmierstoff- bzw. Ölfilter und Schmierstoff- bzw. Ölpumpe eine untergeordnete Rolle.

Die Anmelderin behält sich vor, auch diese Erfindung im Rahmen einer Teilanmeldung zu beanspruchen.

Bevorzugt weist wenigstens ein Teil der Schmierstoffleitung zwischen dem Schmierstoffsumpf und der Schmierstoffpumpe Magnete auf, die geeignet und dafür vorgesehen sind, verschleißbedingte, beim Betrieb des Getriebes anfallende und abgesonderte Partikel aus dem Schmierstoff, der durch die Schmierstoffleitung strömt, zu binden und damit aus dem in die Pumpe strömenden Schmierstoff zu entfernen. Hierfür ist bevorzugt eine Ölablassschraube vorgesehen, welche mit Magneten ausgestattet sein kann oder aus magnetischem Material bestehen kann, um Partikel, die verschleißbedingt beim Betrieb des Getriebes abgesondert werden, zu binden. Außerdem ist bevorzugt ein Schmierstoff- bzw. Ölfilter vorgesehen, welcher die nicht magnetischen Partikel aus dem Schmierstoff- bzw. Ölkreislauf herausfiltert.

Die Anmelderin behält sich vor, auch diese Erfindung im Rahmen einer Teilanmeldung zu beanspruchen.
Bevorzugt sind die in axialer Richtung des inneren Drehteils nacheinander angeordneten inneren Koppelmodule der Koppelmechaniken durch siebartige bzw. netzartige Elemente voneinander getrennt. Damit können bevorzugt auch die einzelnen Klemmkörper durch diese Elemente voneinander getrennt sein. Bevorzugt sind die siebartigen bzw. netzartigen Elemente kreisringförmig ausgestaltet und an dem inneren Drehteil angeordnet, so dass sie dieses vollumfänglich umfassen. Besonders bevorzugt ist jeweils ein siebartiges bzw. netzartiges Element bzw. eine Siebscheibe zwischen einem Klemmkörper und einem Lagerelement (für die Lagerung des inneren Koppelmoduls an dem inneren Drehteil) und/oder zwischen einem Lagerelement eines inneren Koppelmoduls einer Koppelmechanik und dem Lagerelement eines inneren Koppelmoduls der benachbarten Koppelmechanik angeordnet.

Die nacheinander, insbesondere baugleichen, angeordneten Kupplungshebel (innere Koppelmodule) können dabei bevorzugt in ihren kreisringförmigen Ausschnitt mit Siebscheiben versehen sein, um die Klemmkörperreihen sowie Radiallager voneinander zu trennen. Größere Partikel z.B. Abplatzungen können, bevorzugt durch diese siebartigen bzw. netzartigen Elemente bzw. Siebscheiben, durch die hervorgerufene Strömung des Schmierstoff- bzw. Ölflusses aufgehalten werden und in den benachbarten Kupplungshebel keinen Schaden anrichten.

Die Anmelderin behält sich vor, auch diese Erfindung im Rahmen einer Teilanmeldung zu beanspruchen.

Bevorzugt kann eine Erzeugung der Strömungsgeschwindigkeit des Schmierstoffs durch eine fremdangetriebene Schmierstoff- bzw. Ölpumpe z.B. elektrisch erfolgen. Die Schmierstoff- bzw. Ölpumpe kann besonders bevorzugt auch direkt von den drehenden Teilen des Getriebes angetrieben werden.

Bevorzugt weist das stufenlose Getriebe eine Zahnradschmierstoff- bzw. ölpumpe auf. Besonders bevorzugt erfolgt die Erzeugung der Strömungsgeschwindigkeit des Schmierstoffs mittels einer Zahnradschmierstoff- bzw. ölpumpe. Es hat sich nämlich gezeigt, dass in der bevorzugten Ausführungsform des stufenlosen Getriebes keine Druckschmierung erforderlich ist, sondern bevorzugt lediglich ein (geringer) Volumenstrom des Schmierstoffes bereitgestellt werden muss. Vorteilhaft wird dabei die Zahnradschmierstoff- bzw. ölpumpe mit bereits in dem stufenlosen Getriebe vorhandenen Systemkomponenten wie Zahnradübertragungsmittel verwirklicht. Besonders vorteilhaft wird ein Zahnkranz des äußeren Drehteils eingesetzt als Zahnrad für eine Zahnradschmierstoff- bzw. ölpumpe, wobei bevorzugt ein zweites Zahnrad der Zahnradschmierstoff- bzw. ölpumpe ein Zahnrad ist, das auf der Abtriebsseite des stufenlosen Getriebes in Verbindung mit der Abtriebswelle eingesetzt ist. Durch die Verwendung dieser Zahnräder in einer Zahnradschmierstoff- bzw. ölpumpe werden diese gleichzeitig geschmiert, wodurch Reibung reduziert wird.

Am Schwenkgehäuse wird hierfür bevorzugt eine Einrichtung angebracht, die den Eingriffsbereich der Verzahnung der beiden Zahnräder ober- und unterhalb voll umschließt. Bevorzugt umschießt die Einrichtung dabei nicht eines der beiden oder auch beide Zahnräder vollständig. In der Nähe des Eingriffsbereiches beider Zahnräder wird bevorzugt eine Bohrung ober- und/oder unterhalb des Eingriffsbereiches radial gesetzt und besonders bevorzugt mit Sumpf und Ölpumpe (Druckseite) verbunden. Damit kann bevorzugt Schmierstoff an der Position des Eingriffs der Zähne der beiden Zahnräder vorbeigeführt werden. Das Funktionsprinzip basiert auf dem einer Zahnradpumpe. Vor der Verzahnung, die in Eingriff steht, entsteht ein Unterdruck der den Schmierstoff bzw. das Öl aus dem Sumpf ansaugt. Nach dem Eingriff der Verzahnung entsteht Überdruck, der die Systemkomponenten wie vorbekannt mit Schmierstoff zuverlässig versorgt. Außer Zahnradpumpen können vorteilhaft auch Flügel-, Kolben-, Membranpumpen zum Einsatz kommen.

Die Anmelderin behält sich vor, auch diese Erfindung im Rahmen einer Teilanmeldung zu beanspruchen.

In einer bevorzugten Ausführungsform ist das innere Koppelmodul derart ausgestaltet, dass es als zweiseitiger Hebel wirkt. Angelpunkt des zweiseitigen Hebels ist dabei der Drehpunkt des inneren Koppelmoduls. Dieser liegt bevorzugt auf der Drehachse des inneren Drehteils. Ein erster Hebelarm ist dabei bevorzugt durch denjenigen Teil des inneren Koppelmoduls gegeben, der sich ausgehend von dem Drehpunkt des inneren Koppelmoduls zum inneren Koppellager (zur ersten Lagerstelle) bzw. zum äußeren Koppelmodul hin erstreckt. Der zweite Hebelarm des inneren Koppelmoduls stellt bevorzugt das Gegengewicht zum ersten Hebelarm des inneren Koppelmoduls dar.

Bevorzugt ist der zweite Hebelarm des inneren Koppelmoduls derart ausgebildet, dass sich das Drehmoment auf Seite des ersten Hebelarms des inneren Koppelmoduls im Gleichgewicht befindet mit dem Drehmoment auf Seite des zweiten Hebelarms. Dabei sollen bevorzugt an beiden Hebelarmen lediglich ihre Massen, nicht aber zusätzlich wirkende Kräfte berücksichtigt werden. Besonders bevorzugt wird dabei im Falle des ersten Hebelarms auch das Drehmoment in Bezug auf den Angelpunkt bzw. Drehpunkt des inneren Koppelmoduls, das sich aus der auf den ersten Hebelarm wirkenden Gewichtskraft des inneren Koppellagers ergibt, welches den ersten Hebelarm abschließt, neben dem Drehmoment des ersten Hebelarms berücksichtigt. Mit anderen Worten wird besonders bevorzugt die Masse des inneren Koppellagers, bzw. ein Lagerbolzen und eine Lagerbüchse des inneren Koppellagers, auch im Hinblick auf das Gesamtdrehmoment des ersten Hebels berücksichtigt. Das durch die Masse des inneren Koppellagers, bzw. des Bolzen und der Lagerbüchse, hervorgerufene Drehmoment wird bevorzugt mit einem Gegengewicht auf dem zweiten Hebelarm ausgeglichen. Dabei kann dieses Gegengewicht bevorzugt am Ende des zweiten Hebelarms angeordnet sein. Denkbar wäre aber auch jede andere Massenverteilung des zweiten Hebelarms, die derart gewählt ist, dass sich die Gesamtdrehmomente auf beiden Seiten der Hebelarme zueinander im Gleichgewicht befinden.

Die Anmelderin behält sich vor, auch diese Erfindung im Rahmen einer Teilanmeldung zu beanspruchen.

In einer bevorzugten Ausführungsform ist das äußere Koppelmodul derart ausgestaltet, dass es als zweiseitiger Hebel wirkt. Angelpunkt dieses zweiseitigen Hebels ist dabei der Drehpunkt des äußeren Koppelmoduls. Dieser ist bevorzugt am äußeren Drehteil angeordnet. Ein erster Hebelarm des äußeren Koppelmoduls ist dabei bevorzugt durch denjenigen Teil des äußeren Koppelmoduls gegeben, der sich ausgehend von dessen Drehpunkt zum inneren Koppellager (bzw. zur ersten Lagerstelle) zum inneren Koppelmodul hin erstreckt. Der zweite Hebelarm des äußeren Koppelmoduls stellt bevorzugt das Gegengewicht zum ersten Hebelarm des äußeren Koppelmoduls dar.

Bevorzugt ist der zweite Hebelarm des äußeren Koppelmoduls derart ausgebildet, dass sich das Drehmoment auf Seite des ersten Hebelarms des äußeren Koppelmoduls im Gleichgewicht befindet mit dem Drehmoment auf Seite des zweiten Hebelarms. Dabei sollen bevorzugt an beiden Hebelarmen lediglich ihre Massen, nicht aber zusätzlich wirkende Kräfte berücksichtigt werden.

Vorteilhaft wird dabei in einer ersten Variante das Drehmoment, das sich durch das Gewicht des inneren Koppellagers, bzw. die Bolzen und Lagerbüchse des inneren Koppellagers, ergibt, nicht beim Drehmoment des ersten Hebelarms berücksichtigt. Die Bolzen und Lagerbüchse des ersten Kopplungslagers zählen also bevorzugt massenspezifisch nicht, weil sie massentechnisch dem Kupplungshebel (d.h. inneres Koppelmodul) zugerechnet werden. Der Kopplungshebel (d.h. das äußere Koppelmodul) selbst verfügt über einen eigenen Massenausgleich ähnlich wie eine Balkenwaage.

Die Anmelderin behält sich vor, auch diese Erfindung im Rahmen einer Teilanmeldung zu beanspruchen.

In einer zweiten Variante wird bevorzugt im Falle des ersten Hebelarms des äußeren Koppelmoduls auch das Drehmoment des inneren Koppellagers, welches den ersten Hebelarm abschließt, neben dem Drehmoment des ersten Hebelarms selbst berücksichtigt. Mit anderen Worten wird bevorzugt das innere Koppellager, bzw. ein Lagerbolzen und eine Lagerbüchse des inneren Koppellagers, auch zum Gesamtdrehmoment des ersten Hebels gezählt. Das durch die Masse des inneren Koppellagers, bzw. des Bolzens und der Lagerbüchse, hervorgerufene Drehmoment wird bevorzugt mit einem Gegengewicht auf dem zweiten Hebelarm ausgeglichen. Dabei kann dieses Gegengewicht bevorzugt am Ende des zweiten Hebelarms angeordnet sein. Denkbar wäre aber auch jede andere Massenverteilung des zweiten Hebelarms, die derart gewählt ist, dass sich die Gesamtdrehmomente auf beiden Seiten der Hebelarme zueinander im Gleichgewicht befinden.
In dieser zweiten Variante werden also bevorzugt Lagerbolzen und Lagerbüchse dem Kopplungshebel (d.h. dem äußeren Koppelmodul) zugerechnet. Das Gegengewicht des Kopplungshebels (d.h. des äußeren Koppelmoduls) muss somit zusätzlich Bolzen und Lager ausgleichen.

Die Anmelderin behält sich vor, auch diese Erfindung im Rahmen einer Teilanmeldung zu beanspruchen.

Bevorzugt ist jeweils die Länge des zweiten Hebelarms des inneren und des äußeren Koppelmoduls kürzer als die Länge des ersten Hebelarms. Besonders bevorzugt ist dann aber die Dicke und/oder Breite und/oder das spezifische Gewicht des zweiten Hebelarms größer als bei dem ersten Hebelarm.

Bevorzugt sind jeweils zwei benachbarte Koppelmechaniken diametral gegenüberliegend hinsichtlich der Drehachse des inneren Drehteils angeordnet.

Bei der ersten und der zweiten Variante werden bevorzugt die Koppelsysteme diametral gegenüberliegend angeordnet. Der Massenausgleich findet annährend zwar statt, mit der Einschränkung verbunden, dass die ausgleichende Koppelmechanik axial versetzt angeordnet ist. Daraus folgt, dass der Massenausgleich nicht direkt gegenüber erfolgt, sondern über einen Winkel und deswegen nicht vollständig ausgeglichen werden kann.

Der relative Massenausgleich wurde beschrieben. Der absolute Massenausgleich kann mit vorbeschriebenen Maßnahmen nur annährend gewährleistet werden. Ziel ist es, die rotierenden Massen unabhängig von den Auslenkungen der Koppelmechanik auszugleichen. Dies geschieht, indem man versucht eine einzelne Koppelmechanik massenneutral zu gestalten. Da der Kopplungshebel (d.h. das äußere Koppelmodul) massentechnisch wie eine Balkenwaage wirkt, ist seine Lage unerheblich. Der Kupplungshebel (d.h. das innere Koppelmodul) samt Bolzen und Lager massenneutral gestaltet ergibt keine Unwucht, somit wird nur noch diametral gegenüberliegend zum Drehpunkt des Kopplungshebels (d.h. des äußeren Koppelmoduls) ein Gegengewicht benötigt das vom Betrag genauso hoch ist wie das Gewicht des Kopplungshebels (d.h. des äußeren Koppelmoduls). Somit wird erreicht, dass eine einzelne Koppelmechanik kinematische Arbeit verrichten kann und gleichzeitig die umlaufenden Massen absolut ausgeglichen sind. Da in einer Anordnung meist mehr Koppelmechaniken arbeiten, wird ein sehr ruhiger Lauf möglich.

Bevorzugt ist daher am äußeren Drehteil mindestens ein Gegengewicht vorgesehen, welches das Gewicht des äußeren Koppelmoduls hinsichtlich eines Drehmoments bezüglich der Drehachse des äußeren Drehteils ausgleicht. Dabei können entsprechend auch mehrere Gegengewichte oder aber auch eine kontinuierliche Gegengewichtsverteilung vorgesehen sein.

Die Anmelderin behält sich vor, auch diese Erfindung im Rahmen einer Teilanmeldung zu beanspruchen.

In einer weiteren vorteilhaften Ausführungsform weist das stufenlose Getriebe eine Dämpfungseinrichtung zum Dämpfen der pulsierenden Abtriebsenergie auf. Bevorzugt ist als Dämpfungseinrichtung ein Zweimassenschwungrad vorgesehen. Besonders bevorzugt ist dabei eine Abtriebswelle des stufenlosen Getriebes mit dem massentechnisch geringeren Teil des Zweimassenschwungrades verbunden, wobei dann vorteilhaft der schwerere Teil des Zweimassenschwungrades den Abtrieb darstellt.

Um die pulsierende Drehbewegung zum einen gleichförmiger, zum anderen überlastfester gestalten zu können empfiehlt es sich nämlich, als erstes die Massenträgheiten sämtlicher sich drehender und/oder bewegender Teile möglichst gering zu halten. Die Zentralwelle bzw. das innere Drehteil gehört bevorzugt nicht dazu. Als zweites wird bevorzugt die Welligkeit am An/Abtrieb mit Drehfederdämpfern ausgestattet, ähnlich wie dies bei Scheibenkupplungen von PKW's üblich ist. Da die Übertragungsenergie am Abtrieb annähend sinusförmig ist, können Drehmomentspitzen das maximal zulässige Nenndrehmoment überschreiten. Bei Betrieb eines Zweimassenschwungrades ist die Abtriebswelle bevorzugt mit dem massentechnisch geringen Anteil zu verbinden. Der schwerere Teil, des Zweimassenschwungrades stellt bevorzugt den Abtrieb dar und übernimmt somit vorteilhaft die Glättung der pulsierenden Drehbewegung. Somit wird bevorzugt nach dem Zweimassenschwungrad eine gleichförmige Drehbewegung gewährleistet.

Die Anmelderin behält sich vor, auch diese Erfindung im Rahmen einer Teilanmeldung zu beanspruchen.
An der Abtriebsseite kann bevorzugt ein hydrodynamischer Drehmomentwandler verwendet werden. Dieser kann entweder dem Zweimassenschwungrad vor- oder nachgeschaltet werden und/oder auch am Getriebeeingang eingesetzt werden.

Die Anmelderin behält sich vor, auch diese Erfindung im Rahmen einer Teilanmeldung zu beanspruchen.

In einer weiteren vorteilhaften Ausführungsform werden die Koppelmechaniken über eine Lagerungseinrichtung/en, wie beispielsweise Lagerbolzen, an dem äußeren Drehteil gelagert. Bevorzugt wird dabei jede Koppelmechanik von einer separaten Lagerungseinrichtung, wie beispielsweise einem separaten Lagerbolzen, gelagert. Mit anderen Worten dient somit eine einzelne Lagerungseinrichtung bevorzugt lediglich zur Aufnahme bzw. zur Lagerung einer einzigen Koppelmechanik. Besonders bevorzugt erstreckt sich auch eine Lagerungseinrichtung, beispielsweise ein Lagerbolzen, auch nur ausschließlich auf den entsprechenden Bereich der Koppelmechanik, den sie lagert. Das heißt, dass sich die Lagerungseinrichtung räumlich auf den Innenraum des äußeren Drehteils beschränkt, der sich radial um denjenigen Abschnitt des inneren Drehteils erstreckt, der der jeweiligen zu lagernden Koppelmechanik zugeordnet ist (also im Wesentlichen der Bereich des inneren Drehteils, an dem die jeweilige Koppelmechanik an dem inneren Drehteil angeordnet ist).

Im äußeren Drehteil sind bei beispielsweise sechs Koppelmechaniken gegenüberliegend Bolzen über sämtliche Kammern erstreckend in Bohrungen des äußeren Drehteils geführt und gesichert. Dies begrenzt geometrisch den Arbeitsbereich der Koppelmechanik dahingehend, dass der innere Teil des Kopplungshebels (inneres Kopplungslager), das heißt der innere Teil des äußeren Koppelmoduls, an dem benachbarten Bolzen anstößt und den Hubbereich begrenzt. Ersetzt man die langen Bolzen bevorzugt gegen kurze Bolzen, die nur eine Kammer überbrücken, so gewinnt man zusätzlich Platz, der vorteilhaft von der Koppelmechanik genutzt werden kann. Somit würde der Koppelmechanik mehr Platz zur Verfügung stehen, was die Gesamtübersetzung erhöhen würde. Aus der Massenbetrachtung heraus ist bevorzugt ein Gegengewicht diametral entgegengesetzt anzubringen. Durch den zusätzlich gewonnen Platz erhöht sich die Leistungsfähigkeit des Getriebes mit gleichzeitiger Reduzierung der umlaufenden Massen im äußeren Drehteil.

Die Anmelderin behält sich vor, auch diese Erfindung im Rahmen einer Teilanmeldung zu beanspruchen.

Bevorzugt erfolgt eine aktive Kopplung zwischen dem inneren Drehteil und dem inneren Koppelmodul. Unter einer aktiven Kopplung wird dabei verstanden, dass ohne zusätzliche Steuerung eine kraftschlüssige Kopplung zwischen dem inneren Drehteil und dem inneren Koppelmodul hergestellt wird, sobald sich das innere Drehteil schneller dreht als das innere Koppelmodul, und dass, sobald sich das innere Koppelmodul langsamer dreht als das innere Drehteil, der Kraftschluss aufgehoben wird. Dabei besteht bevorzugt, auch in einem Leerlaufzustand eines inneren Koppelmoduls, wenigstens ein geringer mechanischer Kontakt (über Reibung) des inneren Koppelmoduls zu dem inneren Drehteil, besonders bevorzugt über Klemmkörper bzw. eine Klemmkörperreihe.

Bei Übersetzung erfolgt bevorzugt die Kraftübertragung zwischen dem inneren Drehteil und dem inneren Koppelmodul (Kupplungshebel) immer dann, wenn das innere Drehteil (angetrieben) sich schneller dreht als das innere Koppelmodul (der Kupplungshebel). D.h. dass aus der Kinematik begründet der Freilauf bevorzugt schaltet (Klemmkörper) und für diesen Moment einen Kraftschluss herstellt. Wenn das innere Koppelmodul (der Kupplungshebel) langsamer dreht als das innere Drehteil, dann wird der Kraftschluss aufgehoben. Dieses Prinzip ermöglicht eine Selbststeuerung der Kupplung und somit eine Übertragung von Energie. Die geringe Reibung der Klemmkörper in die Leerlaufrichtung ermöglicht bevorzugt vorerklärten Prozess.

Bevorzugt erfolgt eine passive Kopplung zwischen dem inneren Drehteil und der Koppelmechanik bzw. dem inneren Koppelmodul. Hierfür ist bevorzugt eine Steuerungseinrichtung vorgesehen, die in Abhängigkeit von der Winkelgeschwindigkeit des inneren Drehteils und/oder in Abhängigkeit der Winkelgeschwindigkeit eines inneren Koppelmoduls der Koppelmechanik eine kraftschlüssige Kopplung zwischen diesem inneren Koppelmodul und dem inneren Drehteil herstellt und/oder löst.

Besonders bevorzugt steuert die Steuerungseinrichtung die Herstellung bzw. die Lösung einer kraftschlüssigen Kopplung in Abhängigkeit von einem Vergleich der Winkelgeschwindigkeit des inneren Drehteils und des inneren Koppelmoduls. Vorteilhaft veranlasst die Steuerungseinrichtung dabei die Herstellung einer kraftschlüssigen Kopplung zwischen dem inneren Drehteil und einem inneren Koppelmodul, sobald das innere Drehteil eine höhere Winkelgeschwindigkeit aufweist als das betreffende innere Koppelmodul und bevorzugt veranlasst die Steuerungseinrichtung die Lösung der kraftschlüssigen Kopplung zwischen dem inneren Drehteil und einem inneren Koppelmodul, sobald die Winkelgeschwindigkeit des inneren Koppelmoduls abnimmt.

Bevorzugt kann die Steuerungseinrichtung eine kraftschlüssige Kopplung zwischen jeder Koppelmechanik bzw. jedem inneren Koppelmodul und dem inneren Drehteil herstellen, bevorzugt in beliebiger Reihenfolge.

Bevorzugt ist wenigstens ein Sensorelement vorgesehen, mittels welchem die Steuerungseinrichtung die Winkelgeschwindigkeit des inneren Koppelmoduls einer Koppelmechanik bestimmen kann. Besonders bevorzugt weist jede Koppelmechanik ein Sensorelement auf, so dass jeweils dessen Winkelgeschwindigkeit bestimmt werden kann. Dabei kann auch nur ein Sensorelement vorgesehen sein, mittels welchem die Steuerungseinrichtung lediglich die Winkelgeschwindigkeit eines inneren Koppelmoduls direkt bestimmen kann. Bevorzugt kann die Steuerungseinrichtung ausgehend von der Winkelgeschwindigkeit dieses einen inneren Koppelmoduls über fest vorgegebene Phasenbeziehungen die Winkelgeschwindigkeiten all der anderen inneren Koppelmodule bestimmen.

Bevorzugt erfolgt ein Kraftübertrag zwischen dem inneren Drehteil und einer Koppelmechanik bzw. dem inneren Koppelmodul einer Koppelmechanik hydraulisch.

Man kann die Kraftübertragung bevorzugt fremdgesteuert mittels Sensoren und extern betätigten Kupplungselementen erreichen. Das angetriebene innere Drehteil ist bevorzugt mit nacheinander vorteilhaft in der Zahl der Koppelungshebel (äußere Koppelmodule) angeordneten Scheiben versehen, die jeweils mit einem z.B. hydraulischen Sattel der mit dem inneren Kopplungslager drehbar verbunden ist. Somit kann der Kupplungsprozess bevorzugt über einen Rechner präzise und effektiv gesteuert werden. Es werden Soll- und Istwerte von dem inneren Drehteil und Sattel (innerer Kopplungshebel) betreffend der Geschwindigkeit verglichen. Ist die Scheibe der Zentralwelle genauso schnell wie der Sattel, so schließt bevorzugt die Hydraulik die Scheibe umfassenden Bremsbeläge, die für diesen Moment in Kraftschluss gehen. Energie kann somit übertragen werden. Wenn die Winkelgeschwindigkeit des Sattels wieder langsamer wird, so öffnet die Hydraulik die Beläge und gibt die betroffene Scheibe wieder frei. Der Prozess wiederholt sich bei jeder Umdrehung des inneren Drehteils zyklisch, abhängig von der gewählten Übersetzung.

In einer weiteren Variante ist wenigstens ein Sensorelement in dem stufenlosen Getriebe vorgesehen, welches in Abhängigkeit von der Kinematik der drehbaren Bauteile, beispielsweise des inneren Drehteils und/oder eines Klemmkörpers und/oder wenigstens einer Klemmkörperreihe und/oder des inneren Koppelmoduls ein Steuersignal ausgibt, wenn die Winkelgeschwindigkeit des inneren Drehteils diejenige des inneren Koppelmoduls überschreitet bzw. die Winkelgeschwindigkeit des inneren Koppelmoduls abnimmt. Dies kann beispielsweise darüber erfolgen, dass das Sensorelement geeignet ist, zu erfassen, ob ein Klemmkörperelement unter kraftschlüssiger Verbindung mit dem inneren Drehteil und dem inneren Koppelmodul steht. Denkbar wäre dies beispielsweise mittels eines Drucksensors.

Denkbar wären anstelle der obig beschriebenen kraftschlüssigen Kopplungen auch andere Kopplungsarten, etwa formschlüssige Kopplungen.

Die Anmelderin behält sich vor, auch diese Erfindung im Rahmen einer Teilanmeldung zu beanspruchen.

Bevorzugt weist das innere Koppelmodul Materialien auf bzw. besteht aus Materialien, die eine Zugfestigkeit aus dem Bereich zwischen 200 - 2000 N/mm², besonders bevorzugt zwischen 800 und 1000 N/mm² aufweisen. Ferner kann bevorzugt das Material für die innenliegenden Teile aus einer Gruppe von Materialien ausgewählt sein, die Mangan-Stahl, Carbonstahl, Titan-Titan-Aluminium-Legierungen, Einsatzstahl, Gussstahl, Verbundmaterialien und Kombinationen hieraus beinhaltet.

Bevorzugt kann das innere Drehteil von Koppelelementen gegen ein Durchbiegen abgestützt werden.

Die Anmelderin behält sich vor, auch diese Erfindung im Rahmen einer Teilanmeldung zu beanspruchen.

In einer weiteren bevorzugten Ausführungsform sind am äußeren Drehteil Magnete angeordnet.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben.

Es zeigen:
- Fig. 1: eine dreidimensionale Ansicht eines stufenlosen Getriebes gemäß einem ersten Ausführungsbeispiel;
- Fig. 2: eine Draufsicht auf ein stufenloses Getriebe gemäß dem ersten Ausführungsbeispiel;
- Fig. 3: eine Schnittansicht des stufenlosen Getriebes gemäß dem ersten Ausführungsbeispiel;
- Fig. 4: eine Draufsicht auf ein äußeres Drehteil des stufenlosen Getriebes gemäß einem zweiten Ausführungsbeispiel;
- Fig. 5: einen Schnitt entlang einer Linie A-A in Fig. 4 durch das äußere Drehteil des stufenlosen Getriebes gemäß dem zweiten Ausführungsbeispiel;
- Fig. 6: einen Schnitt entlang einer Linie C-C in Fig. 4 durch das äußere Drehteil des stufenlosen Getriebes gemäß dem zweiten Ausführungsbeispiel;
- Fig. 7: eine Draufsicht auf ein äußeres Drehteil des stufenlosen Getriebes gemäß einem dritten Ausführungsbeispiel;
- Fig. 8: einen Schnitt entlang einer Linie A-A in Fig. 7 durch das äußere Drehteil des stufenlosen Getriebes gemäß dem dritten Ausführungsbeispiel;
- Fig. 9: einen Schnitt parallel zum Radius durch ein inneres Drehteil des stufenlosen Getriebes gemäß einem fünften Ausführungsbeispiel;
- Fig. 10: einen Längsschnitt durch das innere Drehteil des stufenlosen Getriebes gemäß dem fünften Ausführungsbeispiel;
- Fig. 11 und Fig. 12: schematische Darstellungen zur Veranschaulichung eines Aufbaus einer Koppelmechanik des stufenlosen Getriebes gemäß einem sechsten Ausführungsbeispiel;
- Fig. 13: eine schematische Darstellung eines Aufbaus einer Koppelmechanik des stufenlosen Getriebes gemäß einem siebenten Ausführungsbeispiel;
- Fig. 14 bis Fig. 16: Ansichten eines inneren Koppelungsmoduls des stufenlosen Getriebes gemäß einem achten Ausführungsbeispiel;
- Fig. 17 und Fig. 18: Ansichten eines äußeren Koppelungsmoduls des stufenlosen Getriebes gemäß dem achten Ausführungsbeispiel;
- Fig. 19 und Fig. 20: jeweils Ansichten von Varianten für einen Klemmkörper des stufenlosen Getriebes gemäß dem achten Ausführungsbeispiel;
- Fig. 21 und Fig. 22: jeweils Ansichten von weiteren Varianten für einen Klemmkörper des stufenlosen Getriebes gemäß dem achten Ausführungsbeispiel;
- Fig. 23 bis Fig. 26: jeweils Varianten für eine Axialsicherung eines Bolzens oder einer Welle des stufenlosen Getriebes gemäß dem achten Ausführungsbeispiel;
- Fig. 27 bis Fig. 31: jeweils Varianten für eine radiale Verdrehsicherung eines Bolzens oder einer Welle des stufenlosen Getriebes gemäß dem achten Ausführungsbeispiel;
- Fig. 32: eine Schnittansicht einer Ausführungsform des stufenlosen Getriebes zur Illustration einer Variante für eine Schmierstoffversorgung;
- Fig. 33: eine schematische Schnittansicht einer bevorzugten Ausführungsform eines Teils des stufenlosen Getriebes zur Illustration einer Variante für eine Schmierstoffversorgung mit einer ersten und einer zweiten Schmierstoffführungseinrichtung;
- Fig. 34: eine schematische Darstellung einer Zahnradschmierstoffpumpe;
- Fig. 35: eine schematische Darstellung der Anordnung und Ausgestaltung des inneren und äußeren Koppelmoduls zur Illustration des relativen und absoluten Massenausgleichs der beweglichen Koppelmodule;
- Fig. 36: eine schematische Querschnittszeichnung einer bevorzugten Ausführungsform;
- Fig. 37: eine schematische Querschnittszeichnung einer bevorzugten Ausführungsform mit Planetenradgetriebe.

In den Figuren sind gleiche oder funktionsgleiche Elemente, sofern nichts anderes angegeben ist, mit denselben Bezugszeichen versehen.

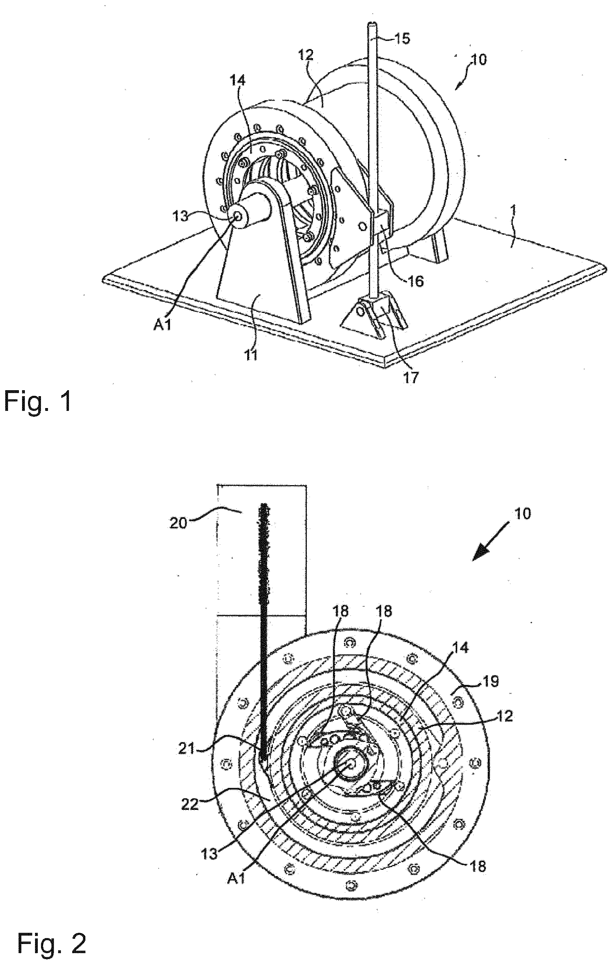

Fig. 1 zeigt eine Grundplatte 1, an welcher ein stufenloses Getriebe 10 ohne Gehäuse montiert ist. Die Grundplatte 1 kann je nach Bedarf auch anders ausgestaltet sein. Das Getriebe 10 hat ein erstes Lager- und Führungsmodul 11 und ein zweites Lager- und Führungsmodul 12, sowie ein inneres Drehteil 13, das um seine Achse A1 drehbar ist, ein äußeres Drehteil 14 und ein Verstellelement 15, das in einem Führungselement 16 geführt und mit einem Lager 17 drehbar gelagert ist.

Wie in Fig. 2 gezeigt, in welcher die Grundplatte 1 nicht dargestellt ist, hat das stufenlose Getriebe 10 zudem mehrere Koppelmechaniken 18 und ein Gehäuse 19, das um das zweite Lager- und Führungsmodul 12 herum angeordnet ist, sowie optional auch eine Verstellantriebseinrichtung 20 und eine Lagerstelle 21 für das Verstellelement 15. Ein Befestigungsflansch für das zweite Lager- und Führungsmodul 12 kann im Gehäuse 19 integriert sein. Bei dem stufenlosen Getriebe 10 gemäß Fig. 1 und Fig. 2 koppeln die Koppelmechaniken 18 das als Welle ausgeführte innere Drehteil 13 und das hohlzylindrisch ausgeführte äußere Drehteil 14. Damit kann eine Wandlung der Drehzahl des inneren Drehteils 13 in eine Drehzahl des äußeren Drehteils 14 oder umgekehrt ausgeführt werden. Bei dem in Fig. 1 und Fig. 2 dargestellten Fall ist das Verhältnis der Drehzahlen von innerem Drehteil 13 und äußerem Drehteil 14 gleich 1:1, so dass das stufenlose Getriebe 10 weder eine Übersetzung noch Untersetzung ausführt. Das innere und äußere Drehteil 13, 14 sind in diesem Fall mit der gleichen Drehzahl drehbar.

Bei dem stufenlosen Getriebe 10 dient das erste Lager- und Führungsmodul 11 zum Lagern und Führen des inneren Drehteils 13. Das innere Drehteil 13 ist an dem ersten Lager- und Führungsmodul 11 drehbar gelagert und in dem äußeren Drehteil 14 angeordnet, welches außen um das innere Drehteil 13 angeordnet ist. Das erste Lager- und Führungsmodul 11 stellt sicher, dass das innere Drehteil 13 ausschließlich eine Drehbewegung um seine Achse A1 ausführen kann.

Demgegenüber dient das zweite Lager- und Führungsmodul 12 zum Lagern und Führen des äußeren Drehteils 14. Das zweite Lager- und Führungsmodul 12 hat wie das äußere Drehteil 14 eine hohlzylindrische oder trommelförmige Form und lagert das äußere Drehteil 14 an seiner Außenseite. Das zweite Lager- und Führungsmodul 12 lagert das äußere Drehteil 14 gegenüber dem inneren Drehteil 13 schwenkbar. Die Schwenkverstellung kann mit dem Verstellelement 15 in Form einer Gewindespindel ausgeführt werden. Hierbei ist das Verstellelement 15 in dem Führungselement 16 nach oben in Fig. 1 oder Fig. 2 zu bewegen, um bei dem stufenlosen Getriebe 10 eine Übersetzung Ü > 1 einzustellen. Wird das Verstellelement 15 in dem Führungselement 16 jedoch nach unten in Fig. 1 oder Fig. 2 bewegt, ist bei dem stufenlosen Getriebe 10 ebenfalls eine Übersetzung Ü > 1 einstellbar. Dabei ist das äußere Drehteil 14 so verstellbar, dass das innere Drehteil 13 exzentrisch zu der Achse des äußeren Drehteils 14 angeordnet ist. In solchen Fällen ist die Übersetzung des stufenlosen Getriebes 10 ungleich 1:1. Insbesondere hat sich bei Versuchen herausgestellt, dass die Übersetzung von außen nach innen, also von dem äußeren Drehteil 14 auf das innere Drehteil 13, anders als eine Übersetzung von innen nach außen ist, also von dem inneren Drehteil 13 auf das äußere Drehteil 14. Insbesondere kann mit dem Verstellelement 15 eine dreidimensionale Schwenkbewegung des äußeren Drehteils 14 realisiert werden. Die Punkte der Schwenklagerung sollten möglichst weit auseinander liegen.

Wie in Fig. 2 veranschaulicht, kann das Verstellelement 15 optional auch mit der Verstellantriebseinrichtung 20 bewegt werden, die als Motor und insbesondere als Spindelgetriebemotor, usw., oder als Kolben, wie insbesondere ein doppelwirkender Hydraulikkolben, ein doppelwirkender Pneumatikkolben, usw., ausgeführt ist. Hierfür kann die Verstellantriebseinrichtung 20, genauer gesagt die Lagerstelle 21 in Fig. 2 auch in axialer Richtung des zweiten Lager- und Führungsmoduls 12 mittig an dem zweiten Lager- und Führungsmodul 12 angeordnet sein. Demzufolge ist die Verstellantriebseinrichtung 20 in Fig. 2 auch in axialer Richtung mittig zum äußeren Drehteil 14 angeordnet. Bei einer solchen Anordnung ist die Krafteinleitung besonders vorteilhaft. Die Anordnung kann jedoch auch an jedem Punkt längs des Zylinders erfolgen. Insgesamt ist jedoch zu berücksichtigen, dass die Punkte der Verstell- bzw. Schwenklagerung möglichst weit auseinander liegen sollten, um eine möglichst hohe Torsionsstabilität von dem zweiten Lager-und Führungsmodul 12 einhergehend mit dem Gehäuse 19 zu erhalten.

Gemäß der Konstruktion des stufenlosen Getriebes 10 gemäß Fig. 2 haben die Funktionsteile, wie zweites Lager- und Führungsmodul 12, äußeres Drehteil 14, Gehäuse 19 kreisringähnliche Formen. Dies hat seinen Grund darin, dass annähernd kreisringförmige zylindrische Teile in ihrer Mantelebene bezogen auf ihren Durchmesser extrem hohe Torsions-bzw. Biegekräfte aufnehmen können. Das innere Drehteil 13 in Fig. 2 weist den geringsten Durchmesser auf, aber die größte Wandstärke. Die Wandstärke der einzelnen Funktionsteile nimmt mit Zunahme des Durchmessers der einzelnen Funktionsteile ab. Aus diesem Grunde können die Wandstärken gering gehalten werden, was unabhängig vom Material geringes Gewicht bei höchster Festigkeit nach sich zieht.

Der in Fig. 2 dargestellte Ringspalt 22 zwischen dem Gehäuse 19 und dem zweiten Lager-und Führungsmodul 12 ist nicht unbedingt erforderlich. Das Gehäuse 19 kann auch zumindest in einem Teilbereich direkt anliegend an dem zweiten Lager- und Führungsmodul 12 angeordnet sein.

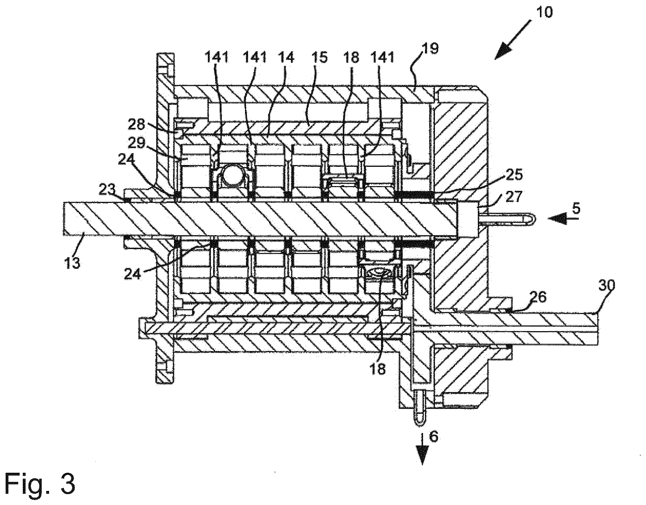

Fig. 3 zeigt das stufenlose Getriebe 10 in einer Variante mit sechs Koppelmechaniken 18 in einem Längsschnitt. Es können aber auch mehr oder weniger Koppelmechaniken 18 vorhanden sein. Die Koppelmechaniken 18 sind jeweils zwischen zwei Stegen 141 des äußeren Drehteils 14 angeordnet. Die Stege 141 kragen jeweils in radialer Richtung des äußeren Drehteils 14 in Richtung auf das erste Drehteil 13 aus. Der Übersichtlichkeit halber sind in Fig. 3 nur ein Teil der Koppelmechaniken 18 und der Stege 141 mit einem Bezugszeichen versehen. In Fig. 3 sind zudem erste bis vierte Dichtungselemente 23, 24, 25, 26, eine Aussparung 27, ein Lager 28 zur Lagerung des äußeren Drehteils 14 und Lagerbolzen 29 für die Koppelmechaniken 18 dargestellt. Der Übersichtlichkeit halber sind in Fig. 3 nur zwei der zweiten Dichtungselemente 24 mit einem Bezugszeichen versehen. Um das innere Drehteil 13 sind die Koppelmechaniken 18 über einen Klemmkörperfreilauf bzw. eine Radiallagerung angeordnet und zudem mit dem äußeren Drehteil 14 verbunden. In dem Koppelsystem aus Koppelmechaniken 18 und Klemmkörperfreilauf bzw. Radiallagerung entstehen entsprechend ihren Wirkwinkeln einhergehend mit den Massebeschleunigungen beim Betrieb des stufenlosen Getriebes 10 variierend sehr hohe Zug- bzw. Druckkräfte in einer Größenordnung von ca. 4000 N bei 160 Nm Abgabe Drehmoment, welche Kräfte zwischen dem innere Drehteil 13 und dem äußeren Drehteil 14 wirken. Als Folge davon müssen alle Bauteile des stufenlosen Getriebes 10 diesen hohen Kräften standhalten. Daher ist das äußere Drehteil 14 an seiner Innenseite mit den Stegen 141 in kreisringförmige Kammern unterteilt, die zwei Aufgaben besitzen. Zum einen geben die Stege 141 und damit die Kammern dem äußeren Drehteil 14 eine extrem hohe Radialstabilität und Formtreue, zum anderen bilden die kreisringförmigen Stege 141 eine Aufnahme zur Lagerung der Koppelmechaniken 18.

Zudem hat das stufenlose Getriebe 10 in Fig. 3 eine Pumpe 30, welche einen Schmierstoff in Richtung eines Pfeils 5, also in axialer Richtung, in das Gehäuse 19 pumpen kann. In Richtung eines Pfeils 6, also in radialer Richtung, kann die Pumpe 30 den Schmierstoff aus dem Gehäuse 19 pumpen. Damit kann die Pumpe 30 in axialer Richtung alle um das innere Drehteil 13 angeordneten Lagerstellen und die Koppelmechaniken 18 mit Schmierstoff versorgen. Dadurch können die Temperaturen des stufenlosen Getriebes 10 niedrig gehalten werden, so dass möglichst wenig Reibung vorhanden ist. Der Schmierstoff 10 kann insbesondere Öl sein.

Wie in Fig. 3 gezeigt, wird der Schmierstoff von der Pumpe 30 in die kreisringförmige Aussparung 27 axial und oberhalb der Mantellinie des inneren Drehteils 13 eingepumpt. Zudem sind die hintereinander angeordneten Koppelelemente 18 axial gegeneinander und gegenüber dem Gehäuse 19 mit den ersten bis vierten Dichtungselementen 23, 24, 25, 26 abgedichtet, damit auch das von der Schmierstoffversorgung am weitesten entfernte Koppelsystem/Lager oder Kupplungssystem/Lager ausreichend mit Schmierstoff versorgt wird. Die vorbeschriebene Abdichtung ist derart ausgestaltet, dass sie für den Schmierstoff in radialer Richtung teildurchlässig wirkt.

Demzufolge sind die zweiten Dichtelemente 24 in axialer Richtung des inneren Drehteils 13 um das innere Drehteil 13 angeordnet. Die zweiten Dichtelemente 24 können als Anlauf-/Dichtscheiben ausgeführt sein, welche in radialer Richtung Riefen oder Kanäle oder Bohrungen aufweisen, welche den Zweck haben, eine bestimmte Menge an Schmierstoff an die Koppelmechaniken 18 und die restlichen Lagerstellen gelangen zu lassen. Im Betrieb des stufenlosen Getriebes 10 wird der Schmierstoff durch die Zentrifugalkraft vom inneren Drehteil 13 nach außen in Richtung auf das äußere Drehteil 14 und das Gehäuse 19 gefördert. An der Gehäuseinnenwand läuft der Schmierstoff an die tiefste Stelle und kann von dort aus von der Pumpe 30 angesaugt und in Richtung des Pfeils 6 aus dem Gehäuse 19 gefördert werden. Somit verteilt die Zentrifugalkraft der rotierenden Teile einen Anteil des Schmierstoffes effektiv an die Koppelmechaniken 18 und alle anderen Lagerstellen. Die Pumpe 30 kann auch mit Zahnrädern realisiert werden.

Somit besteht bei dem stufenlosen Getriebe 10 gemäß dem ersten Ausführungsbeispiel ein hochwirksamer Schmierstoffkreislauf, bei welchem das innere Drehteil 14 als massives Teil ausgeführt ist. Das innere Drehteil 14 weist beispielsweise keine Ölversorgungsbohrungen auf, die eine Schwächung der Wellenstatik darstellen und von welchen Bruchlinien ausgehen können. Dies ist ein großer Vorteil, da das innere Drehteil 14 bezogen auf alle anderen zylindrischen Bauteile des stufenlosen Getriebes 10 immer das schwächste Glied in der Konstruktion darstellt. Grund dafür ist, dass das innere Drehteil 14 immer bezogen auf die anderen zylindrischen Bauteile den geringsten Durchmesser hinsichtlich ihrer Spannweite aufweist, und deswegen ihre Durchbiegung am stärksten ist.

Aus diesem Grund kann das innere Drehteil 14 auch aus Hochleistungswerkstoffen gefertigt sein, wie z.B. Spezialstähle, usw., die sehr hohe Zug/Druckspannung aufweisen, oder mit möglichst großen Durchmessern.

In einer Modifikation des ersten Ausführungsbeispiels sind die Koppelmechaniken 18 ohne axialen Abstand zum inneren Drehteil 13 angeordnet. In diesem Fall entfallen die zweiten Dichtelemente 24. Die schmierstofffördernden Riefen oder Kanäle oder Bohrungen sind dann direkt seitlich an den Koppelmechaniken 18 angebracht.

Gemäß einer weiteren Modifikation des ersten Ausführungsbeispiels kann der Schmierstoff durch stationäre Düsen am Gehäuse 19 auf die Koppelmechanik 18 gesprüht werden. Die Düsen können auch am zweiten Lager- und Führungsmodul 12 befestigt sein. Die Koppelmechanik 18 weist an der Seite zum äußeren Drehteil 14 hin axiale Schmierstoffführungsschlitze auf, die es gestatten, den Schmierstoff an die Lagerstellen zu führen.

Bei dem stufenlosen Getriebe 10 stellt die Betriebsdrehzahl und die damit verbundene Leistungsfähigkeit des inneren oder äußeren Drehteils 13, 14 als Schwingungserzeuger eine wichtige Säule dar. Es besteht die Möglichkeit, den Schwingungserzeuger mit einem Vielfachen der Eingangsdrehzahl anzutreiben und entsprechend mit derselben Übersetzung Ü die Abtriebsdrehzahl herunter zu übersetzen. Beispielsweise gilt 1:3 Antrieb; 3:1 Abtrieb.

Da die Koppelmechanik 18 bezogen auf die Eingangsdrehzahl öfters drehen bzw. schalten muss, sinkt pro Schaltimpuls das Übertragungsdrehmoment. Das heißt, die Koppelsysteme schalten öfters mit entsprechend der Übersetzung niedrigeren Drehmomenten. Somit sollten möglichst hochdrehzahlfeste Schwingungserzeuger bereitstehen, die möglichst keine rotatorischen Unwuchten aufweisen. Die weiteren Ausführungsbeispiele zeigen hierfür spezielle weitere Ausgestaltungen.

Es ist außerdem anzumerken, dass bezogen auf den Phasenwinkel der Eingangsdrehzahl entsprechend der Eingangsübersetzung ein Impuls erzeugt wird, das heißt z.B. der Schwingungserzeuger weist sechs Koppelmechaniken 18 auf, die an dem äußeren Drehteil 14 um jeweils 60° versetzt angeordnet sind. Das bedeutet bei einer Eingangsübersetzung von 1:3 erfolgt alle 20° bezogen auf den Phasenwinkel der Eingangsdrehzahl ein Impuls. Wenn man davon ausgeht, dass bei dem Getriebe 10 bei einer Übersetzung Ü = 1:1 die Antriebsdrehzahl gleich der Abtriebsdrehzahl ist, so muss die Eingangsübersetzung wieder nach dem Schwingungserzeuger rückgängig gemacht werden also 3:1. Dies bedeutet ausgehend von dem zuvor genannten Beispiel mit sechs Koppelmechaniken 18, dass am Getriebeausgang alle 60° ein Impuls erfolgt, nur mit dem Unterschied, dass der Schwingungserzeuger die zu übertragende Energie dreimal öfters geschaltet hatte, einhergehend mit einen entsprechenden niedrigerem Kopplungsdrehmoment. Mit dieser Methode kann der Übersetzungsbereich vergrößert und die Schaltdrehmomente der Kopplungssysteme reduziert werden.

Bei einem stufenlosen Getriebe 10 mit nachgeschaltetem Differenzial und Nulldurchgang wirken sich die Vorteile besonders aus. Die Erweiterung dieser Eigenschaften stellt die Verschaltung eines Schwingungserzeugers mit einem Differenzialgetriebe dar. Realisiert man die Anordnung mit einem Planetenradgetriebe, welches 20 Zähne am Sonnenrad und 100 Zähne am Hohlrad aufweist, so kann man das Sonnenrad mit dem Abtrieb des Schwingungserzeugers verbinden, der fünfmal höher als die Eingangsdrehzahl dreht, wobei das Hohlrad einmal entgegengesetzt zur Eingangsdrehzahl dreht. Wird das Hohlrad an der Außenverzahnung angetrieben, so wird ein zusätzliches Zahnrad benötigt. Wird das Hohlrad innen angetrieben, so entfällt dieses Zahnrad. Wird die Anordnung bei Ü= 0 des Schwingungserzeugers in Betrieb gesetzt, so dreht das Sonnenrad fünfmal und das Hohlrad einmal entgegengesetzt. Die Folge ist, dass der Planetenradsatz steht, welcher den Getriebeabtrieb darstellt. Geht man von dem zuvor genannten Beispiel aus, sechs Koppelmechaniken 18 einzusetzen, so dividiert sich der Impulsphasenwinkel hier 60° durch den Faktor der Leistungsverzweigung hier Faktor 5. Daraus ergibt sich 60° geteilt durch 5 gleich 12°. Da die Bezugsebene Null ist, ist zum einen die Impulsanzahl und Übersetzung vom Verzweigungsverhältnis des Planetenradgetriebes abhängig und zum anderen davon abhängig, wie hoch das stufenlose Getriebe 10 bezogen auf die Drehzahl einer nicht dargestellten Antriebsmaschine übersetzt ist.

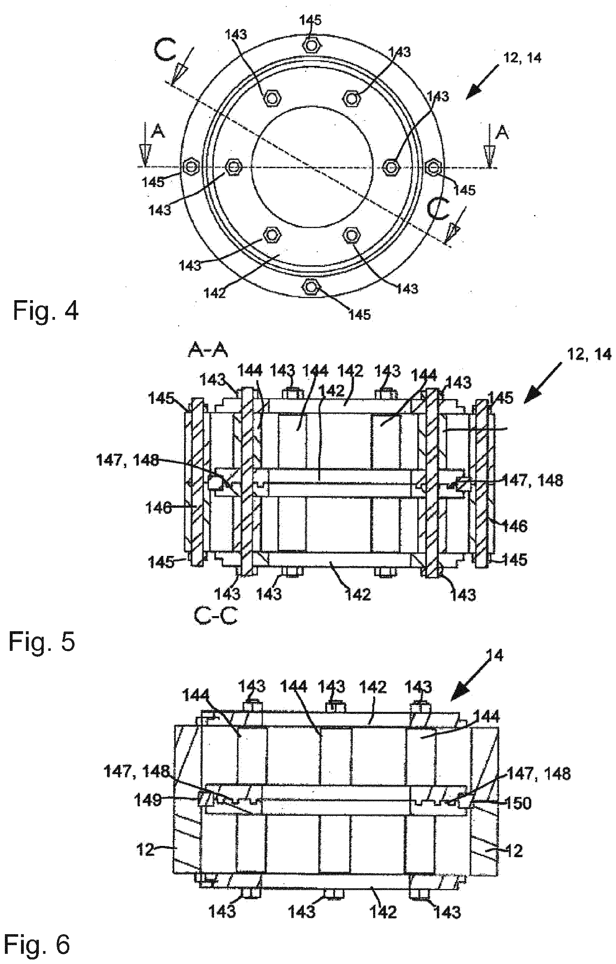

Gemäß einem zweiten Ausführungsbeispiel ist das äußere Drehteil 14 abgeändert, wie in Fig. 4 bis Fig. 6 dargestellt und nachfolgend beschrieben. Ansonsten ist das stufenlose Getriebe 10 aufgebaut, wie bei dem ersten Ausführungsbeispiel.

Bei dem vorliegenden Ausführungsbeispiel sind für das äußere Drehteil 14 Scheiben 142, die insbesondere kreisringförmig ausgestaltet sind, mittels Befestigungselementen 143, wie Schrauben, Stäbe und Muttern, usw., an Lagerbolzen 144 befestigt. Die Befestigungselemente 143 sind an den Enden der Lagerbolzen 144 angeordnet. Eine der Scheiben 142 kann Öffnungen, die andere Gewindeöffnungen aufweisen. Die Anzahl der Scheiben 142 wird durch die Anzahl der durch die Stege 141 gebildeten Kammern bestimmt. Zudem sind in Bezug auf das zweite Lager- und Führungsmodul 12 Befestigungselemente 145, wie Schrauben, Stäbe und Muttern, usw., und Lagerbolzen 146 vorgesehen. Somit sind in Fig. 4 bis Fig. 6 als Befestigungselemente 143, 145 jeweils ein Stab mit Gewinde an seinem beiden Enden mit Muttern verschraubt. Alternativ kann der Stab auch nur an einem seiner beiden Enden mit einem Gewinde versehen sein. Der Stab ist in einem hohlzylindrischen Drehteil, dem Lagerbolzen 144 oder dem Lagerbolzen 146, angeordnet. Der Lagerbolzen 144 dient als Lager des äußeren Teils der Koppelmechanik 18, welcher Teil nachfolgend auch als äußeres Koppelmodul bezeichnet ist. Der Lagerbolzen 146 dient als Lager des zweiten Lager-und Führungsmoduls 12. In Fig. 6 ist außerdem eine Lagerung mit einem Bezugszeichen 149 versehen.

Bei dieser Ausführung des äußeren Drehteils 14 ist es Zweck, beide Kreisringscheiben 142 derart zu verbinden, so dass sie sich nicht gegeneinander verschieben können. Diese Bauweise, die auch als Druckspannbauweise bezeichnet werden kann, erhöht maßgeblich die Verwindungs- und Biegefestigkeit beider Bauteile, so dass sie die Festigkeit erhalten, als wäre es ein einstückiges Bauteil, das insbesondere kreisringförmig ist. Diese Bauweise ist bei dem stufenlosen Getriebe 10 generell einsetzbar, also für alle konzentrischen Teile des stufenlosen Getriebes 10.

Durch die fehlende Mantelebene sind die Lagerbolzen 144, 146 gegen Durchbiegung besser ausgestattet, In Torsionsrichtung des äußeren Drehteils 14 kann eine höhere Instabilität entstehen, der man beispielsweise mit jeweils zwei gegenüberliegenden Kreuzstäben begegnen kann.

Wie in Fig. 5 zudem gezeigt, sind zwei Scheiben 142 in der Mitte des äußeren Drehteils 14 miteinander mit Hilfe einer Verzahnung 147, 148 verzahnt, die aus einer Auskragung 147 und einer Nut 148 gebildet ist, die beispielsweise umlaufend an der Scheibe 142 ausgestaltet sind. Die Verzahnung 147, 148 kann auch trapezförmig oder wellenförmig sein.

Eine weitere Maßnahme Torsionssteifigkeit zu erhalten ist, wenn neben den Lagerbolzen 144 zusätzliche Elemente nach dem Rohr/Stabprinzip eingesetzt und entsprechend verspannt sind. Um den Kreisringscheiben 142 höchste Stabilität bei möglichst geringem Gewicht zu geben, können Prägemuster/Linien usw. flächig eingepresst sein.

Zudem sollte die Lagerung des äußeren Dreteils 14 nur so groß sein, dass das Verschwenken oder Verstellen des zweiten Lager- und Führungsmoduls 12 möglich ist und ein kreisringförmiges Anschlusssegment für ein Abtriebszahnrad realisiert werden kann.

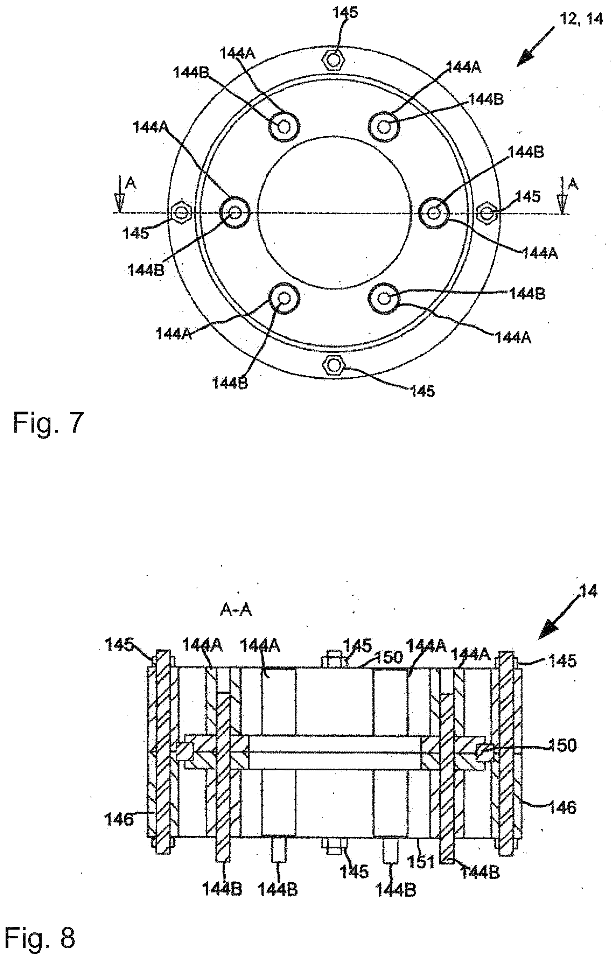

Darüber hinaus kann der von dem äußeren Drehteil 14 gebildete Zylinder an seiner Mantelfläche zur Gewichtsreduzierung Löcher aufweisen, so dass eine Art Gitterstruktur entsteht. Damit wird eine extrem hohe Torsions-/Biegefestigkeit bei geringem Bauteilgewicht erreicht. Gemäß einem dritten Ausführungsbeispiel ist das äußere Drehteil 14 abgeändert, wie in Fig. 7 und Fig. 8 dargestellt und nachfolgend beschrieben. Ansonsten ist das stufenlose Getriebe 10 aufgebaut, wie bei dem zweiten Ausführungsbeispiel.

Bei dem vorliegenden Ausführungsbeispiel sind anstelle der Scheiben 142 von Fig. 4 bis Fig. 6 zwei Hülsen 150, 151 aneinander befestigt. Insbesondere sind die zwei Hülsen 159, 151 gegeneinander verschraubt. Es sind jedoch auch andere geeignete Befestigungsarten denkbar.

Zudem ist bei dem vorliegenden Ausführungsbeispiel bei dem äußeren Drehteil 14 mindestens ein Teil der Lagerbolzen 144 von Fig. 5 und Fig. 6 aus zwei Teilen nämlich Rohr 144A und Stab 144B gebildet werden. Das Rohr 144A und der Stab 144B sind in Fig. 7 und Fig. 8 derart gegeneinander mit den Hülsen 150, 151 verspannt, dass höchste Festigkeit erzielt wird, wie bereits zuvor in Bezug auf Fig. 4 bis Fig. 6 genannt. Die Durchbiegung der Lagerbolzen 144 wird stark minimiert. Somit kann der Lagerbolzen 144 zum einen aus einem Rohr 144A, welches die Lagerstelle bildet, zum anderen aus einem Stab 144B mit Gewinde und Kopf gefertigt sein. Die Länge eines der Rohre 144A definiert den Abstand der Hülsen 150, 151 und somit die Größe des äußeren Drehteils 14. Steckt man durch das Loch des Rohres 144A und der einen Hülse 151 beispielsweise eine Schraube als Stab 144B derart, dass sie am anderen Ende des Rohres 144A mit ihrem Gewinde in das Gewindeloch der anderen Hülse 150 ragt, so kann man das Rohr 144A mit den Hülsen 150, 151 hochfest verschrauben, das heißt das Rohr 144A wird auf Druck beansprucht die Schraube als Stab 144B auf Zug. Es handelt sich hierbei um eine Spannkonstruktion, die hohe Stabilität verspricht und in der Herstellung sehr günstig ist. Die Lagerstelle, also das Rohr 144A, wäre durch den Spannverbund wirksam gegen ungewolltes Verdrehen gesichert.

Dies beschriebene Rohr/Stabbefestigung kann nicht nur in Bezug auf die Hülsen 150, 151 sondern auch bei den Scheiben 142 von Fig. 4 bis Fig. 6 zum Einsatz kommen.

Gemäß einem vierten Ausführungsbeispiel erstrecken sich die kreisringförmigen Stege 141 nach außen über die Mantelebene des äußeren Drehteils 14 hinaus. Hierbei können die Lagerbolzen 144 für das äußere Drehteil 14 wie bisher angeordnet sein, aber auch an der Außenseite des äußeren Drehteils 14. In diesem Fall ist die Mantelebene des äußeren Drehteils 14 an den entsprechenden Stellen durchbrochen, um Raum für die Koppelmechaniken 18 zu schaffen. Die Lagerbolzen 144 müssen gegen ungewolltes Verdrehen gesichert sein, damit sichergestellt wird, dass die Lagerpaarung der Koppelmechanik 18 angesprochen ist. Ansonsten ist das stufenlose Getriebe 10 aufgebaut, wie bei dem ersten Ausführungsbeispiel.

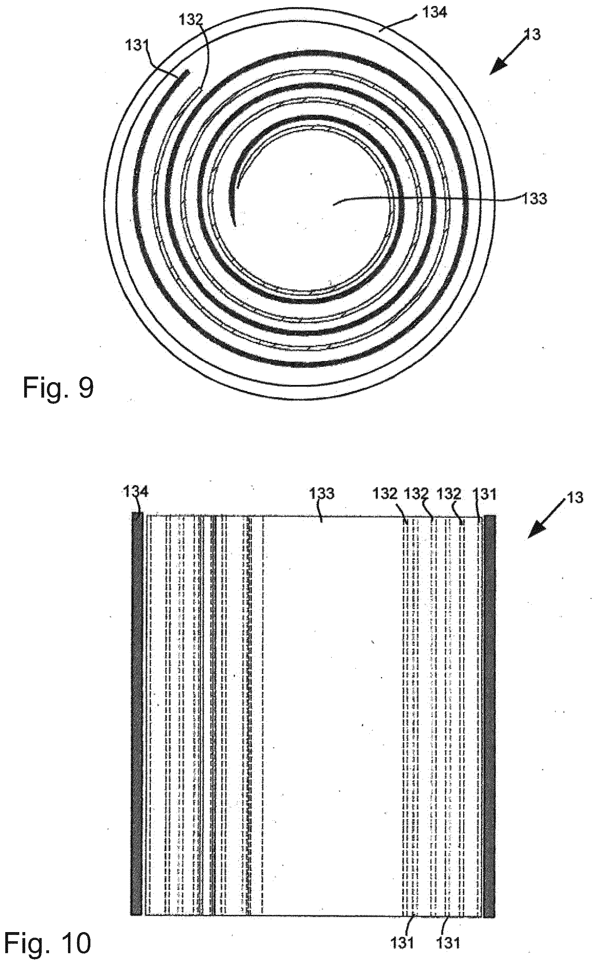

Wie in Fig. 9 und Fig. 10 in einem Quer- und Längsschnitt gezeigt, ist das innere Drehteil 13 gemäß einem fünften Ausführungsbeispiel aus einem oder mehreren Blechen 131, 132 in Wickelbauweise mit Hochleistungsklebstoffen und gegebenenfalls mit Zugspannung hergestellt. Somit bildet sich in der Mitte des inneren Drehteils 13 ein Hohlraum 133. Die Wickelbauweise kann auch in Verbundtechnologie mit unterschiedlichen Materialien Stahl/Carbon laminiert werden. Über diese Verbundbauweise kann ein abschließendes Rohr 134 geschoben und verklebt werden, um den später beschriebenen Klemmkörpern /Lagern für die Koppelmechanik 18 eine geeignete Oberfläche zu geben.

Gemäß Fig. 9 bildet die Verbundkonstruktion in Spiralbauweise ein wellenförmiges Teil als das innere Drehteil 13. In Fig. 9 ist die Spirale zur besseren Veranschaulichung als offene Spirale gezeigt, da zwischen den Blechen 131, 132 jeweils ein Zwischenraum vorhanden ist. In der Realität ist bei dem inneren Drehteil 13 jedoch Lage an Lage der Bleche 131, 132 gewickelt, so dass kein Zwischenraum zwischen den Blechen 131, 132 vorhanden ist.

Somit wird hier eine Alternative zur Herstellung von Teilen aus Stahl mittels Fräs-Drehtechnik vorgestellt, wobei eine Bauweise mit Verbundwerkstoffen bzw. deren Laminiertechnik beschrieben ist. Beispielsweise können Stahlbleche zur Verwendung kommen, die quer zur Winkelrichtung geriffelt oder gewellt sind. Hierbei können die Bleche 131, 132 in Wickelrichtung mit einer bestimmten Zugspannung beaufschlagt werden.

Zudem kann während des Wickelvorganges ein flüssiger Laminierklebstoff zwischen den Schichten eingebracht werden. Man kann auch die verschiedensten Materialien Glas/Karbonfasern mit einlaminieren. Ist der Wickelvorgang abgeschlossen und das Laminat abgebunden, kann die Vorspannung der Wickeltechnik aufgehoben werden und der Rohling in ein Stahlrohr mit Laminierharz eingeschoben werden, abbinden lassen und dann in einem Ofen auf Endfestigkeit gebacken werden. Das Rohr 134 hätte hier die Aufgabe z.B. für das innere Drehteil 13 eine hochvergütete Lauffläche für die Kupplungen eines nachfolgend beschriebenen inneren Koppelmoduls zu bilden. Vorteil dieser Technik ist die vergleichbare Festigkeit der Bauelemente bei höherer Elastizität und einem niedrigeren spezifischen Gewicht als zum Beispiel hochlegierter Stahl zu gewährleisten.

Die Koppelmechanik 18 kann auf dem inneren Drehteil 13 axial geführt sein oder zwischen den Lagerschilden des Gehäuses 19. Demzufolge liegen sämtliche Koppelmechaniken 18 an ihrem Ende zum inneren Drehteil 13 axial an ihrem Nachbarn an, so dass nur die am weitesten entfernten Koppelmechaniken 18 an ihrem Ende zum inneren Drehteil 13 axial geführt werden müssen. An ihrem Ende zum äußeren Drehteil 14 müssen die Koppelmechaniken 18 in der Lagerung im äußeren Drehteil 14 nicht axial geführt sein. Jedoch können die Koppelmechaniken 18 in der Lagerung im äußeren Drehteil 14 axial geführt sein.

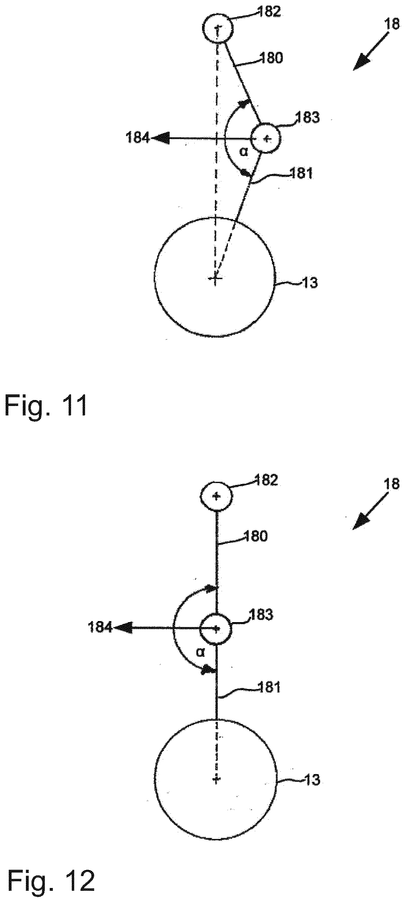

Fig. 11 und Fig. 12 zeigen schematisch den Aufbau der Koppelmechaniken 18 gemäß einem sechsten Ausführungsbeispiel. Die Koppelmechanik 18 umfasst ein äußeres Koppelmodul 180, ein inneres Koppelmodul 181, ein äußeres Lager 182 für das äußere Koppelmodul 180, und ein Lager 183, das als inneres Lager für das äußere Koppelmodul 180 und als äußeres Lager für das innere Koppelmodul 181 dient. Das äußere und innere Koppelmodul 180, 181 sind um einen Winkel α gegeneinander verschwenkbar, wie durch einen Drehpfeil dargestellt. Hierbei ist die Koppelmechanik 18 so ausgestaltet, dass für den Winkel α < 180° gilt, wie in Fig. 11 gezeigt. Dadurch kann die Koppelmechanik 18 nicht in Richtung eines Pfeils 184 in den Zustand umklappen, der in Fig. 12 dargestellt ist. Hierbei zeigt Fig. 11 den Zustand maximaler Exzentrizität der Koppelmechanik 18. Demgegenüber ist der Zustand von Fig. 12 ein unzulässiger Zustand.

Um eine solche Koppelmechanik 18 zu erreichen, kann gemäß einer ersten Variante die Exzentrizität der Koppelmechanik 18 mit der Verstelleinrichtung, gemäß dem Verstellelement 15 und/oder Verstellantriebeinrichtung 20, oder zwischen Gehäuse 19 und zweitem Lager-und Führungsmodul 12 mit "Anschlägen" begrenzt sein. Alternativ oder zusätzlich können gemäß einer zweiten Variante auch in den Gelenkachsen von mindestens einem der äußeren und inneren Lager 182, 183, 184, 185 Anschläge der Koppelmechanik 18 gebildet sein. Jedoch ist die erstere Variante bevorzugt, da sich bei der zweiten Variante ein undefinierter Betriebszustand bilden kann. Möglichkeiten der Gelenkanschläge der inneren und äußeren Koppelmodule 181, 180 sind:
- äußeres Koppelmodul 180 durch Gelenkachse oder Lager 182 schlägt an äußerem Drehteil 14 an,
- inneres und äußeres Koppelmodul 181, 180, weisen in der Nähe der Gelenkachse oder Lager 183 Anschläge derart auf, dass der Winkel α in Fig. 11 nicht größer werden kann. Zusätzlich ist eine Kombination der zuvor genannten Möglichkeiten für die Gelenkanschläge möglich.

Wie zuvor beschrieben, sind die Koppelmechaniken 18 über Klemmkörper an den Drehteilen 13, 14 angeordnet. Die Klemmkörper können vollständig aus Hartmetall z.B. Wolfram, Siliziumkarbit, usw. gefertigt sein.

Zudem kann eine Kupplung der Koppelmechaniken 18 als Scheibenbremse ausgebildet sein, die extern angesteuert werden kann, die Implementierung einer zusätzlichen Koppelmechanik 18 pro Kopplungseinheit ermöglicht eine aus der Kinematik sich ergebende Zwangssteuerung der Bremseinrichtung. Die Steuerung, wie Öffnen und Schließen der Bremse, muss voreilend zu der betreffenden Koppelmechanik 18 erfolgen.

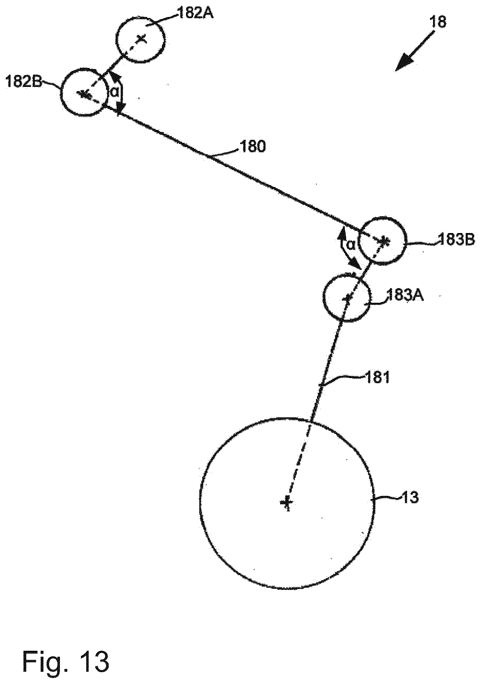

Fig. 13 zeigt schematisch den Aufbau der Koppelmechaniken 18 gemäß einem siebenten Ausführungsbeispiel. Hier umfasst die Koppelmechanik 18 gekröpfte Lagerbolzen 182A, 182B und 183A, 183B. Demzufolge umfasst das äußere Lager 182 für das äußere Koppelmodul 180 die zwei Teile 182A, 182B, das andere Lager 183, das als inneres Lager 184 für das äußere Koppelmodul 180 und als äußeres Lager 185 für das innere Koppelmodul 181 dient, umfasst die zwei Teile 183A, 183B. Daher bewegen sich die inneren und äußeren Koppelmodule 181, 180 nicht um einen Drehpunkt, wie in Fig. 11 und Fig. 12, sondern um zwei Drehpunkte. Hierbei ist der Winkel α bei den Teilen182B, 183B jeweils konstant. Auch dadurch kann die Koppelmechanik 18 nicht in einen unzulässigen Zustand umklappen. Sinn und Zweck der in Fig. 13 dargestellten Koppelmechanik 18 ist es, die Sinusfunktion einer Bewegung einer Koppelmechanik 18 derart zu verformen, dass man sich dem Ideal einer Rechteckfunktion annähert, mit dem Ziel, die Drehbewegung am Abtrieb gleichförmig zu erhalten.

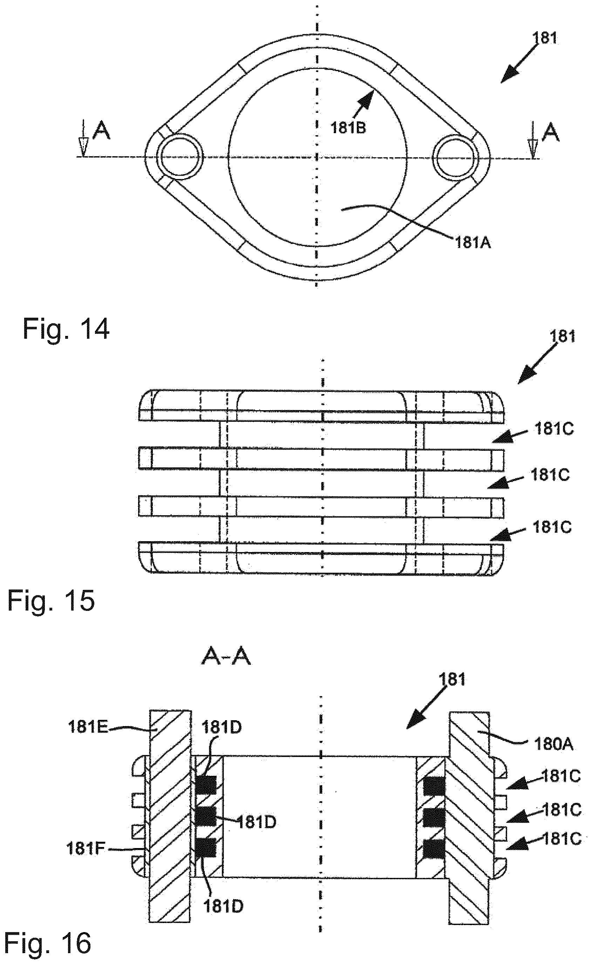

Fig. 14 und Fig. 15 zeigen zwei Ansichten eines inneren Koppelungsmoduls 181 in Leichtbauweise gemäß einem achten Ausführungsbeispiel. Wie in Fig. 14 veranschaulicht, hat das innere Koppelungsmodul 181 die Form einer Doppelnocke. Das innere Koppelungsmodul 181 ist symmetrisch zur strichpunktierten Mittellinie ausgestaltet. An einer innenliegenden Öffnung 181A hat das innere Koppelungsmodul 181 eine Lauffläche 181B für einen Klemmkörpersatz bzw. eine Lagerung.

Fig. 15 zeigt in einer Seitenansicht, dass das innere Koppelungsmodul 181 kein Massivteil ist, sondern mehrere Schlitze 181C aufweist. Die Schlitze 181C können beispielsweise dadurch hergestellt werden, indem das innere Koppelungsmodul 181 entsprechend radial zur inneren Öffnung mehrfach eingedreht wird. Das innere Koppelungsmodul 181 kann auch scheibenweise aufgebaut sein, um die Schlitze 181C herzustellen.

Wie in Fig. 16 in einem Schnitt A-A von Fig. 14 gezeigt, können in die Schlitze 181C Carbonfasern 181D mit Vorspannung laminierend aufgewickelt werden. Die Carbonfasern sind jedoch nicht zwingend vorzusehen. Zudem kann ein Masseausgleichsbolzen 180A an dem inneren Koppelungsmodul 181 vorgesehen sein, welcher die Masse eines Lagerbolzens 181E des äußeren Koppelmoduls 180 ausgleichen kann. Dadurch ist die Masse auf beiden Seiten der strichpunktierten Mittellinie in Fig. 16 genau gleich. Der Lagerbolzen 181E gehört gravimetrisch zum inneren Koppelmodul 181 und ist in einer Lagerhülse 181F geführt. Der gegenüberliegende Masseausgleichsbolzen 180A stellt über die Symmetrieebene das exakte Gegengewicht dar.

Insgesamt ergibt sich durch die in Fig. 15 und auch Fig. 16 gezeigten Maßnahmen bei dem vorliegenden Ausführungsbeispiel eine deutliche Gewichtsreduzierung des inneren Koppelungsmoduls 181 gegenüber einem massiven Bauteil. Darüber hinaus kann das innere Koppelungsmodul 181 durch den Masseausgleichsbolzen 180A sehr vorteilhaft ausgewuchtet werden.

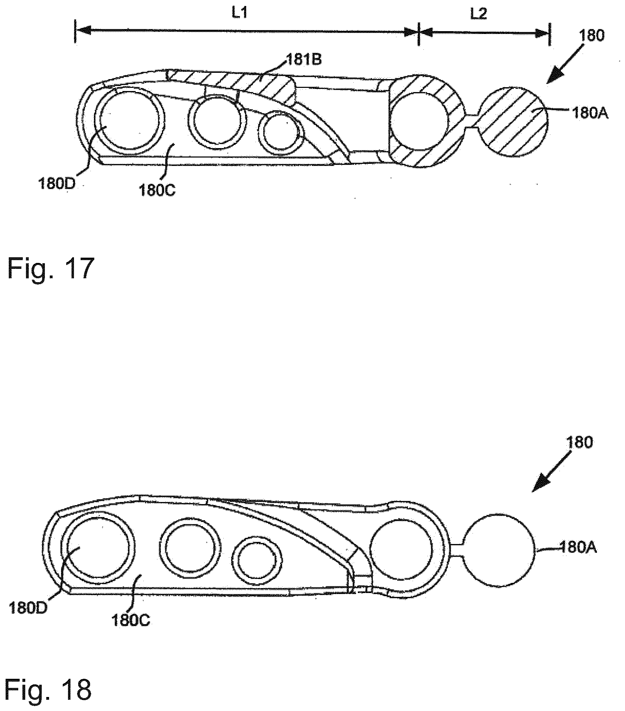

Zudem kann gemäß diesem Ausführungsbeispiel das äußere Koppelungsmodul 180 aufgebaut sein, wie in Fig. 17 in einer Schnittansicht und in Fig. 18 in einer Seitenansicht veranschaulicht. Das äußere Koppelungsmodul 180 wird mit dem Lagerbolzen 181E des inneren Koppelungsmoduls 181 über Öffnungen 180D des äußeren Koppelmoduls 180 dreh/schwenkbar, ähnlich einem Kniegelenk, mit dem inneren Koppelmodul 181 verbunden, wie auch aus Fig. 16 hervorgeht. Das äußere Koppelungsmodul 180 ist bevorzugt so aufgebaut, dass sein Gewicht in dem Bereich L1 gleich seinem Gewicht in dem Bereich L2 ist. Die Linie zwischen L1 und L2 geht vorzugsweise exakt durch den Lagermittelpunkt. Zudem verbindet bei dem äußeren Koppelungsmodul 180 ein Mittelsteg 180B zwei Arme 180C, die das äußere Koppelungsmodul 180 an zwei gegenüberliegenden Seiten begrenzen. Profile des äußeren Koppelmoduls 180, wie beispielsweise sein Mittelsteg 180B und/oder sein(e) Arm(e) 180C, können beispielsweise auch rohrförmig, doppel-T-förmig, usw. sein.

Somit ist auch das äußere Koppelungsmodul 180 durch die beschriebene Masseverteilung sehr vorteilhaft ausgewuchtet.

Mit dem zuvor beschriebenen äußeren und inneren Koppelmodul 180, 181 kann ein vollständiger Massenausgleich des inneren und äußeren Koppelmoduls gewährleistet werden. Dadurch können die sich drehenden koppelnden Funktionselemente die hohen Drehzahlen leisten, die für das stufenlose Getriebe 10 gefordert werden.

Das äußere Koppelungsmodul 180 kann in Tiefzieh- und/oder Blechpresstechnik hergestellt werden. Sind keine Kammern durch Kreisringe im äußeren Drehteil 14 gebildet, ist das äußere Koppelungsmodul 180 deswegen nicht verjüngt, es weist dann in der Draufsicht eine rechteckige Grundform auf.

Bei dem äußeren Koppelungsmodul 180 können in den Wangen bzw. Armen 180C Ölzulaufbohrungen radial in um einer Lagerbohrung 180D Aussparungen, wie insbesondere Nuten, usw., vorgesehen sein, welche die Schmierstoffzufuhr an die Lagerstellen des Bolzens 181E des inneren Koppelmoduls 181 realisieren. Es können zudem radiale Öffnungen, insbesondere durch Bohrungen, in der Lagerhülse 181F des Lagerbolzens 181E des inneren Koppelmoduls 181 angeordnet sein. Das äußere Koppelungsmodul 180 kann axial statt in einer Kammer des äußeren Drehteils 14 auch am Lagerbolzen 29 (Fig. 3) selbst geführt sein. Am inneren Drehteil 13 wird nicht zwingend eine axiale Führung der inneren Koppelmodule 181 benötigt.

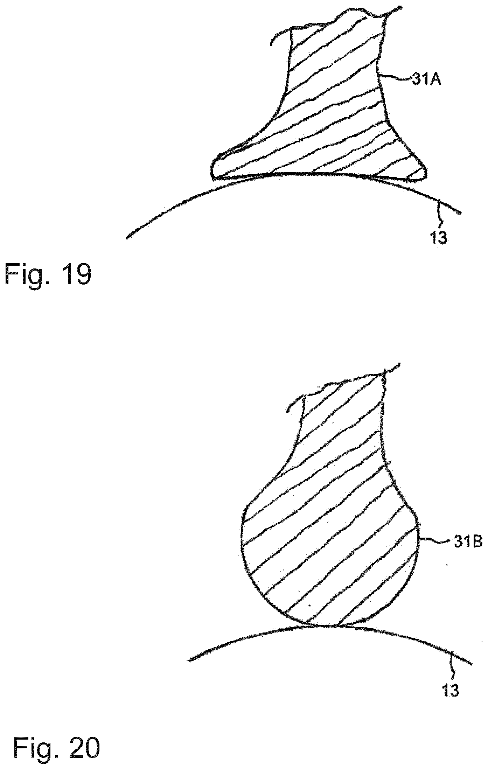

Da auch die Kupplungselemente (Klemmkörper) fähig sein müssen, die Energie zu übertragen, geben Fig. 19 bis Fig. 22 hierfür vorteilhafte Ausführungsvarianten an.

Fig. 19 zeigt einen unteren Fußbereich eines Klemmkörperelements 31A aufliegend auf dem inneren Drehteil 13. Der untere Fußbereich des Klemmkörperelements 31A ist konkav geformt, wohingegen das innere Drehteil 13 konvex geformt ist. Hierbei gilt, dass der Radius der konkaven Wölbung des unteren Fußbereichs des Klemmkörperelements 31 größer als der Radius der konvexen Wölbung des inneren Drehteils 13 ist.

Bei der Ausführungsvariante von Fig. 20 hingegen ist der untere Fußbereich eines Klemmkörperelements 31B kugelig geformt. Hier sind also der untere Fußbereich des Klemmkörperelements 31B und das innere Drehteil 13 konvex geformt. Somit liegt bei dieser Ausführungsvariante nur eine schwache Linienberührung von dem unterem Fußbereich des Klemmkörperelements 31B und dem inneren Drehteil 13 vor. Daher ist bei der Ausführungsvariante von Fig. 20 die Kontaktfläche von Klemmkörperelement 31B und innerem Drehteil 13 mit einem höheren Verschleiß behaftet als bei der Ausführungsvariante von Fig. 19.

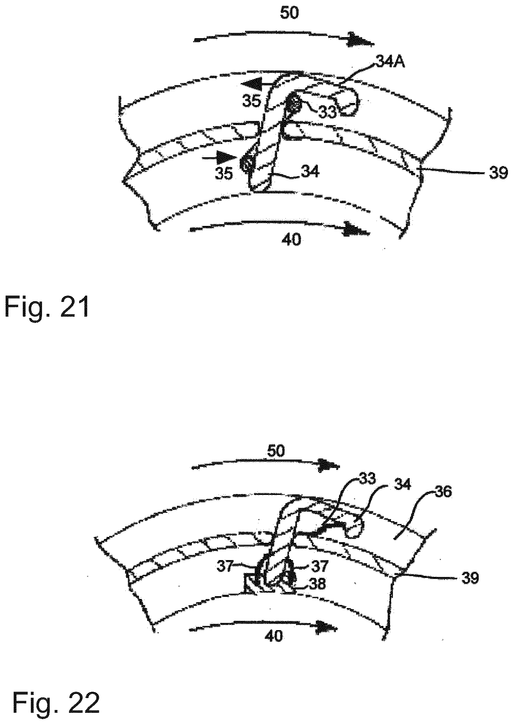

Bei Fig. 21 und Fig. 22 wird das Erreichen der hohen Drehzahlen durch Einzelanfederung der Klemmkörperelemente 34 erreicht. Zusätzlich oder alternativ kann das Erreichen der hohen Drehzahlen durch Zentrifugalkraft oder Fliehkraft bedingtes, beispielsweise durch Klemmkörpergeometrie, Schwerpunkt, Anpressen in einem Ringspalt erreicht werden, wie in Fig. 21 und Fig. 22 veranschaulicht. Zudem sollten, wie bereits zuvor erwähnt, das innere und äußere Koppelmodul 181, 180, sowie das äußere Drehteil 14 möglichst leicht und fest sein.

Fig. 21 zeigt eine Feder 33, welche einen Klemmkörper 34 mit einem Schenkel 34A in Richtung der Pfeile 35 drückt. Die Feder 33, welche den Klemmkörper 34 in die gewünschte Position drückt, kann sich an einem Käfig 39 abstützen, welcher den Klemmkörper 34 aufnimmt. Dadurch wird der Klemmkörper 34 in einen Ringspalt 36 zwischen beispielsweise dem inneren Drehteil 13 und dem inneren Koppelungsmodul 181 gedrückt. Bei Kraftübertragung entsteht über die Senkwirkung die Kraftübertragung. Die Ausladung des Schenkels 34A führt dazu, dass die Zentrifugalkraft, zusätzlich zur Kraft der Feder 33, den Klemmkörper 34 in den Ringspalt 36 presst. In Fig. 21 ist außerdem die Anordnung des Klemmkörpers 34 in Bezug auf die Antriebsrichtung 40 und die Abtriebsrichtung 50 gezeigt.

In Fig. 22 ist ein Ende des Klemmkörpers 34 mit Halteelementen 37 in einem Klemmkörperschuh 38 angeordnet. Die Feder 33 ist hier S-förmig ausgeformt. Mit dieser Variante kann die Oberfläche des Klemmkörpers 34 vergrößert werden, um den Verschleiß zu reduzieren. Das Ende des Klemmkörpers 34 am Klemmkörperschuh 38 hat entweder einen Radius kleiner oder gleich dem Radius der entsprechenden Aufnahme für das Ende des Klemmkörpers 34 im Klemmkörperschuh 38.

Da das äußere Koppelmodul 180 des stufenlosen Getriebes 10 dreidimensionale Bewegungen ausführen kann, sind die Funktionskomponenten zur radialen Lagerung auch axial zu lagern. Nachfolgend sind mehrere Möglichkeiten hierfür beschrieben.

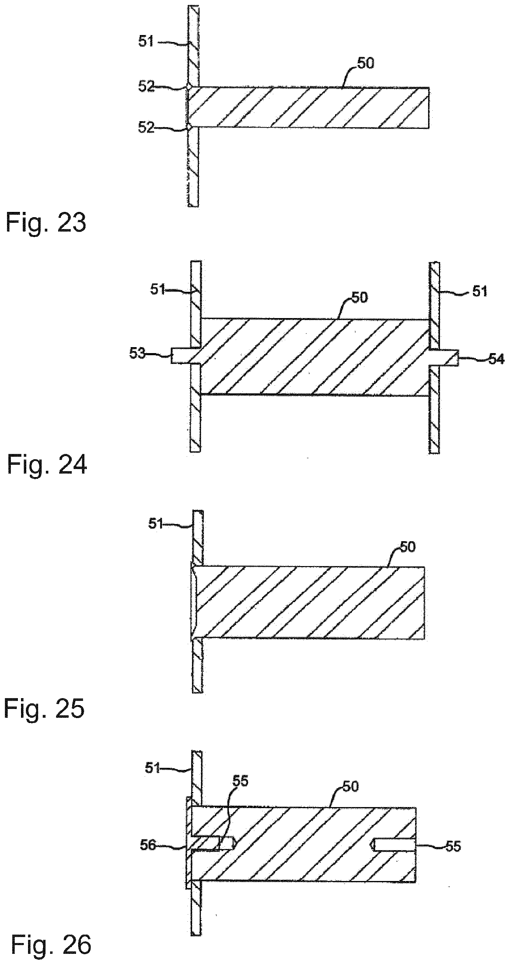

Fig. 23 bis Fig. 26 zeigen jeweils verschiedene Varianten für eine Axialsicherung eines Bolzens oder einer Welle 50 an einem plattenförmigen Element 51, wie beispielsweise einer Scheibe 142. Eine solche Axialsicherung kann beispielsweise für das die Lagerbolzen 180A und/oder auch für das innere Drehteil 13 usw. zum Einsatz kommen.

Gemäß der Variante von Fig. 23 sind die Welle 50 und die Scheibe 51 mittels einer Schweißverbindung 52, in Form von beispielsweise Schweißpunkten, einer Schweißnaht, usw., aneinander befestigt.

Gemäß der Variante von Fig. 24 hat die Welle 50 an ihrem einen Ende einen Stift 53 und an ihrem anderen Ende einen Stift 54. Die Stifte 53, 54 sind jeweils in eine Öffnung einer Scheibe 51 gedreht. Hierbei hat der Stift 53 ein Rechtgewinde. Der Stift 54 hat ein Linksgewinde.

Gemäß der Variante von Fig. 25 ist die Welle 50 in einer Öffnung der Scheibe 51 angeordnet und darin verpresst. Hierfür kann insbesondere der Umfang der Welle etwas größer als der Durchmesser der Öffnung der Scheibe 51 sein.

Gemäß der Variante von Fig. 26 hat die Welle 50 an ihren beiden Enden jeweils eine Öffnung 55. In die Öffnungen 55 kann jeweils eine Tellerschraube 56 eingeschraubt werden, wie auf der linken Seite in Fig. 26 gezeigt.

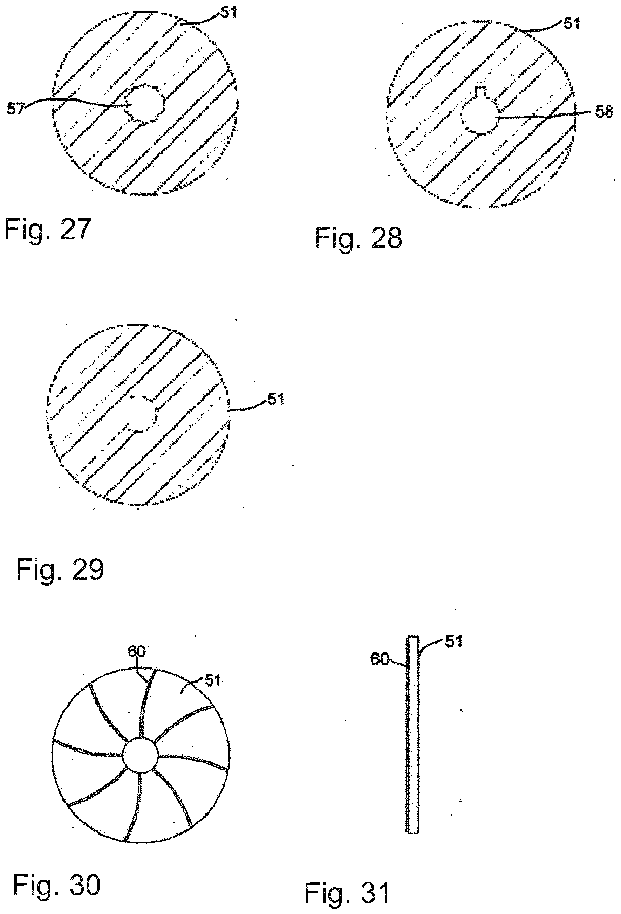

Fig. 27 bis Fig. 30 zeigen jeweils verschiedene Varianten für eine Sicherung gegen Verdrehen eines Bolzens oder einer Welle an einem plattenförmigen Element 51, wie beispielsweise einer Scheibe 142 (Fig.5 und Fig. 6). Eine solche radiale Verdrehsicherung kann beispielsweise für das innere Drehteil 13 oder die Lagerbolzen 180A usw. zum Einsatz kommen. Die radiale Verdrehsicherung kann mit der Axialsicherung gemäß Fig. 19 bis Fig. 22 kombiniert sein.

Gemäß der Variante von Fig. 27 ist in der Scheibe 51 eine Verzahnung 57 in einer Öffnung der Scheibe 51 vorgesehen. Ist die Welle entsprechend verzahnt, kann sie sich mit der Scheibe 51 verzahnen und so gegen ein Verdrehen gegenüber der Scheibe 51 gesichert werden.

Gemäß der Variante von Fig. 28 ist die Öffnung 58 passend für eine Keilwelle ausgestaltet.

Gemäß der Variante von Fig. 29 ist die Öffnung 59 abgeflacht, wobei die Welle entsprechend ausgestaltet ist.

Gemäß der Variante von Fig. 30 und Fig. 31 hat die Scheibe 51 an ihrer Oberfläche in radialer Richtung der Scheibe 51 axiale Erhebungen 60, die in Fig. 30 nicht alle mit Bezugszeichen versehen sind. Die Erhebungen 60 ragen um ein vorbestimmtes Maß aus der Scheibe aus, wie in Fig. 31 veranschaulicht.

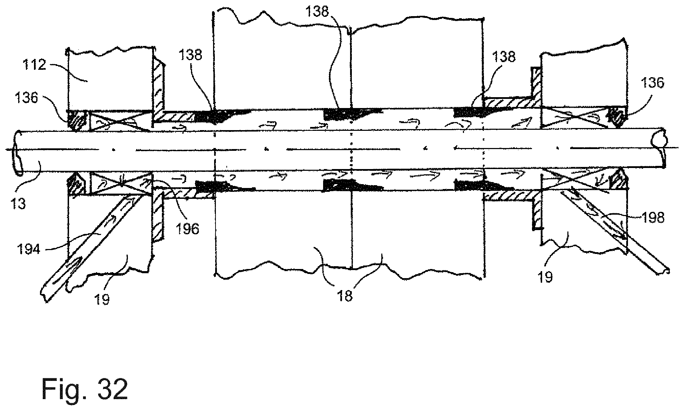

Fig. 32 zeigt eine Ausführungsform einer Schmierstoffversorgung des stufenlosen Getriebes 10. Diese sieht eine erzwungene Schmierstoffversorgung zwischen dem inneren Drehteil 13 und den Koppelmechaniken 18, besonders bevorzugt zwischen dem inneren Drehteil 13 und dem/den inneren Koppelmodul/en, mittels einer Pumpe vor. Dabei besteht ein Schmierstoffstrom in axialer Richtung entlang der Mantelfläche des inneren Drehteils 13. Dazu ist ein erster Führungskanal 194 innerhalb des Lager- und Führungsmoduls 11, bevorzugt innerhalb des Lagerschildes 112 des inneren Drehteils 13 zur Lagerstelle des inneren Drehteils vorgesehen, durch welche der Schmierstoff über eine erste Führungshülse 196, das heißt eine Schnittstelle des stationären Teils (wie das Gehäuse) zum drehbaren Teil (inneres Koppelmodul 181)auf die Mantelfläche des inneren Drehteils 13 eingebracht wird.

Besonders bevorzugt ist dieser Bereich durch den Ringspalt von dem inneren Drehteil 13 und der Bohrung der Koppelmechanik 18, bevorzugt des inneren Koppelmoduls 181 gegeben. Der Schmierstoff wird nun in eine axiale Richtung entlang des inneren Drehteils 13 gefördert. Zwischen den in axialer Richtung des inneren Drehteils 13 hintereinander angeordneten Koppelmechaniken 18 kann vorteilhaft ein definierter Schmierstoffverlust gewollt sein, der bevorzugt die Axiallagerung und/oder die internen Maschinenelemente durch Fliehkraft mit Schmierstoff versorgt. Ferner sind bevorzugt ein zweiter Führungskanalinnerhalb des anderen Lager- und Führungsmoduls, bevorzugt innerhalb des anderen Lagerschildes des inneren Drehteils 13, sowie besonders bevorzugt eine zweite Führungshülse als Schnittstelle des stationären Teils zum drehbaren Teil vorgesehen, welche sich besonders bevorzugt verglichen mit dem ersten Führungskanal und der ersten Führungshülse am in axialer Richtung entgegengesetzten Ende des inneren Drehteils 13 befindet. Der zweite Führungskanal ist vorteilhaft dazu vorgesehen, dass der austretende Schmierstoff in dem entsprechenden Lager des Gehäuses strömen kann. Durch den zweiten Führungskanal 198 ist der Rücklauf des Schmierstoffs vorgesehen bzw. wird der Schmierstoff angesaugt. Der Schmierstoffstrom entlang der Mantelfläche des inneren Drehteils 13 ist an beiden Enden des inneren Drehteils 13 durch jeweils einen Wellendichtring 136 begrenzt. Bevorzugt ist somit ein Schmierstoffstrom lediglich in dem Bereich des inneren Drehteils 13 vorgesehen, der sich in dem Gehäuse 19 befindet.

Bevorzugt kann an der Axiallagerung einer Koppelmechanik 18 ein ringförmiger Steg umfassend angebracht sein, welcher in eine Nut einer benachbarten Koppelmechanik 18 hineinragt.

In einer besonders bevorzugten Ausführungsform der Schmierstoffversorgung des stufenlosen Getriebes 10 werden ineinander laufende, geringfügig beabstandete Ringe an den Koppelmechaniken 18 eingesetzt oder aber es sind Hydraulikdichtungen oder Gleitringdichtungen vorgesehen.

In einer weiteren bevorzugten Ausführungsform der Schmierstoffversorgung sind überlappende Dichtringe 138 zwischen jeweils zwei in axialer Richtung benachbarten Koppelmechaniken 18 vorgesehen, welche mögliche Zwischenräume zwischen den benachbarten Koppelmechaniken 18 gegenüber dem Schmierstoffstrom auf der Mantelfläche des inneren Drehteils 13 abdichten. Besonders bevorzugt verjüngt sich die Dicke dieser Dichtringe 138 in Richtung des Schmierstoffstroms.

Es sind auch beliebige Kombinationen zwischen der sogenannten dichten Schmierstoffversorgung, in der kein wesentlicher Schmierstoffverlust beispielsweise durch Austritt des Schmierstoffs zur Schmierung der internen Maschinenelemente und/oder der Koppelmechanik 18, auftritt, und einer Schmierstoffversorgung mit Schmierstoffverlust denkbar. Eine derartige Kombination könnte etwa in der Anordnung von Dichtringen 138 zwischen nur einigen Koppelmechaniken, nicht aber zwischen allen Koppelmechaniken bestehen.

Vorteilhaft sind durch die in diesen bevorzugten Ausführungsformen für die Schmierstoffversorgung keine stationär in die innen liegenden Maschinenelemente platzierte Düsen oder mitlaufende Düsen nötig. Es könnten jedoch auch stationäre Düsen stattdessen und/oder zusätzlich vorgesehen sein.
Vorteilhaft ist zudem in der Ansaugleitung der Pumpe, die für den Schmierstoffstrom der Schmierstoffversorgung sorgt, ein Feinfilterelement vorgesehen.

Außerdem sind bevorzugt je nach vertikaler oder horizontaler Ausrichtung des stufenlosen Getriebes, das heißt je nachdem ob die axiale Richtung des inneren Drehteils 13 vertikal oder horizontal bei der Inbetriebnahme des stufenlosen Getriebes ausgerichtet ist, entsprechend Bohrungen an dem Behältnis, in dem sich der Schmierstoff während des Betriebs der Pumpe besonders sammelt, für die Pumpe zum Ansaugen des Schmierstoffs vorgesehen. Die Bohrungen befinden sich bevorzugt dabei stets an der Schmierstoffleitung des unteren Teils des stufenlosen Getriebes, in der sich der Schmierstoff aufgrund der Schwerkraft sammelt.

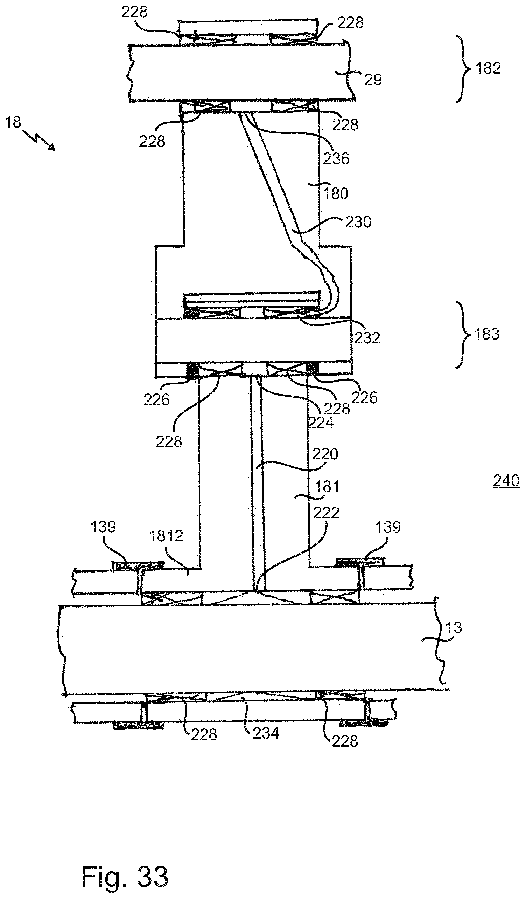

Fig. 33 zeigt eine schematische Schnittansicht einer Ausführungsform eines Teils des stufenlosen Getriebes 10 zur Illustration einer Variante für eine Schmierstoffversorgung mit einer ersten Schmierstoffführungseinrichtung 220 und einer zweiten Schmierstoffführungseinrichtung 230. Gezeigt ist ein Teil des inneren Drehteils 13, an dem über Lagerelemente 228, welche bevorzugt kreisringförmig ausgestaltet sein können und bei welchen es sich besonders bevorzugt um Wälzlager und/oder Gleitlager handelt, und über einen Klemmkörper bzw. eine Klemmkörperreihe 234 eine Koppelmechanik 18 bzw. das innere Koppelmodul 181 der Koppelmechanik 18 gelagert bzw. gekoppelt ist. Wie in Fig. 32 beschrieben, ist eine Schmierstoffversorgung entlang der Mantelfläche des inneren Drehteils 13 bevorzugt vorgesehen. Daher sind Dichtungselemente 139, die ebenfalls bevorzugt als Dichtungsringe ausgeführt sind, vorgesehen, die den Zwischenraum, der sich zwischen dem inneren Drehteil 13 und zwei Bereichen 1812 benachbarter innerer Koppelmodule 181 zweier Koppelmechaniken 18, welche jeweils bevorzugt das innere Drehteil 13 vollumfänglich umfassen und besonders bevorzugt kreisringförmig ausgebildet sind, gegenüber dem Innenraum 240 des äußeren Drehteils 14 hinsichtlich eines Schmierstoffverlusts abdichten.
Das Bezugszeichen 183 kennzeichnet die erste Lagerstelle bzw. das innere Koppellager der Koppelmechanik 18, an dem das innere Koppelmodul 181 an dem äußeren Koppelmodul 180 gelagert ist. Das Bezugszeichen 182 kennzeichnet die zweite Lagerstelle bzw. das äußere Koppellager 182 der Koppelmechanik 18, an dem die Koppelmechanik 18 bzw. das äußere Koppelmodul 180 der Koppelmechanik 18 über Lagerelemente 228, welche bevorzugt kreisringförmig ausgestaltet sind, an einem Lagerbolzen 29 des äußeren Drehteils 14 gelagert ist.
Gezeigt ist darüber hinaus in Fig. 33 eine erste Schmierstoffführungseinrichtung 220. Diese ist dazu geeignet und vorgesehen, Schmierstoff aus dem auf der Mantelfläche des inneren Drehteils 13 vorherrschenden Schmierstoffflusses, der über den Bereich, in dem auch der Klemmkörper bzw. eine Klemmkörperreihe 234 angeordnet ist, über die Aufnahmeöffnung 222 eintritt, durch zumindest teilweises Wirken der Zentrifugalkraft während des Betriebs des stufenlosen Getriebes 10, in Richtung der ersten Lagerstelle 183 zu fördern. Dort kann der Schmierstoff über die Abführöffnung 224 in das innere Koppellager eintreten und dieses mit Schmierstoff versorgen. Außerdem sind Dichtungselemente 226 gezeigt, welche bevorzugt kreisringförmig ausgebildet sind und das innere Koppellager bzw. die Lagerungselemente 228 hiervon zum Innenraum des äußeren Drehteils hin hinsichtlich eines Schmierstoffverlusts abdichten.

Von der ersten Lagerstelle 183 soll nun wiederum, beschleunigt zumindest teilweise durch die Zentrifugalkraft während des Betriebs des stufenlosen Getriebes 10, Schmierstoff zur zweiten Lagerstelle bzw. dem äußeren Koppellager über die zweite Schmierstoffführungseinrichtung 230 gefördert werden.

Dabei sind sowohl die erste Schmierstoffführungseinrichtung 220 als auch die zweite Schmierstoffführungseinrichtung 230 in der gezeigten Ausführungsform vollständig innerhalb der Koppelmechanik angeordnet bzw. als Bohrung des inneren Koppelmoduls 181 bzw. als Bohrung des äußeren Koppelmoduls 180 ausgebildet. Dabei kann die zweite Schmierstoffführungseinrichtung 230 durch ein Dichtungselement 226 geführt sein.

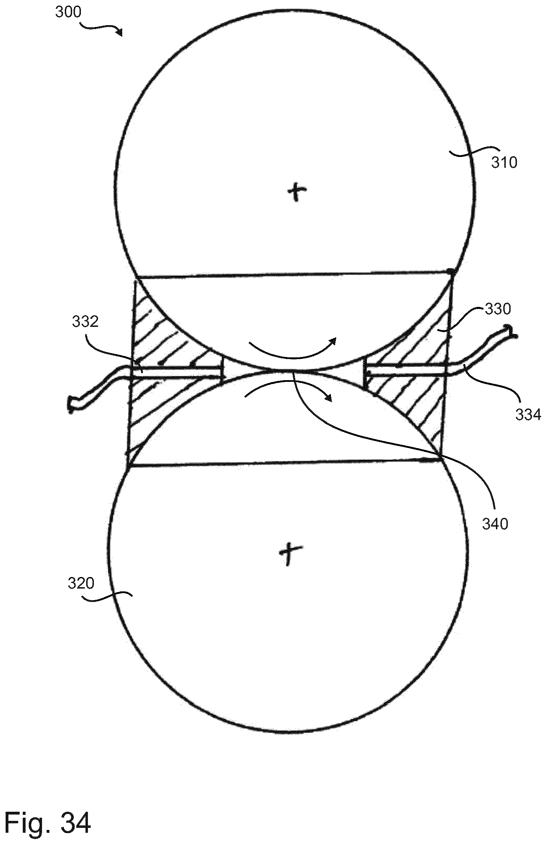

Fig. 34 zeigt eine schematische Darstellung einer Zahnradschmierstoffpumpe 300. Dabei kann bevorzugt entweder ein hierfür verwendetes Zahnrad 310 oder Zahnrad 320, oder auch besonders bevorzugt beide hierfür verwendeten Zahnräder 310, 320 ein Zahnrad oder Zahnräder des stufenlosen Getriebes, vorteilhaft beispielsweise ein Zahnkranz des äußeren Drehteils und bevorzugt als zweites Zahnrad ein Zahnrad, das auf der Abtriebsseite des stufenlosen Getriebes in Verbindung mit der Abtriebswelle eingesetzt ist.. Die Verzahnungen der beiden gezeigten Zahnräder 310 und 320 sind dabei im Eingriff.

Bezugszeichen 330 kennzeichnet eine Einrichtung, die den Eingriffsbereich 340 der Verzahnung der beiden Zahnräder 310 und 320 vollständig umschließt, beispielsweise ein Gehäuse. Hierfür ist allerdings nicht notwendig, dass die beiden Zahnräder 310 und 320 selbst auch vollständig umschlossen werden. Die Einrichtung 330 weist bevorzugt eine Schmierstoffzuleitung 332 auf, über die dem Eingriffsbereich 340 der Verzahnung Schmierstoff zugeführt werden kann, sowie eine Schmierstoffableitung, über die Schmierstoff aus dem Eingriffsbereich 340 der Verzahnung abgeführt werden kann. Besonders bevorzugt ist die Schmierstoffzuleitung 332 mit dem Schmierstoffsumpf (Saugseite) und die Schmierstoffableitung 334 besonders bevorzugt mit dem ersten Führungskanal innerhalb des Lager- und Führungsmoduls verbunden, über die der Druckseite der Schmierstoffversorgung Schmierstoff bereitgestellt werden kann. Bei der mittels der beiden Pfeile veranschaulichten Drehrichtung der beiden Zahnräder 310 und 320 ist dabei die Saugseite (Schmierstoffzuleitung 332) in der Figurenebene links von dem Eingriffsbereich 340 und die Druckseite (Schmierstoffableitung 334) in der Figurenebene rechts von dem Eingriffsbereich 340 gegeben.

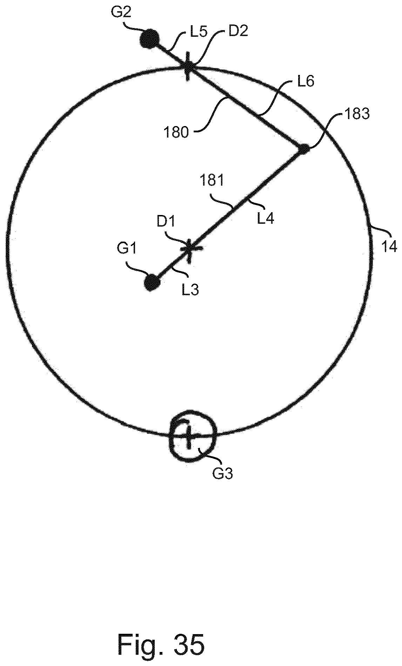

Fig. 35 zeigt eine schematische Darstellung der Anordnung und Ausgestaltung des inneren und äußeren Koppelmoduls zur Illustration des relativen und absoluten Massenausgleichs der beweglichen Koppelmodule. Dargestellt ist dabei das innere Koppelmodul 181, welches um das innere Drehteil 13, genauer um den Drehpunkt D1, der bevorzugt auf der Drehachse des inneren Drehteils 13 liegt, drehbar ist. Über das innere Koppellager 183 bzw. die erste Lagerstelle 183 ist das innere Koppelmodul 181 mit dem äußeren Koppelmodul 180 verbunden. Das äußere Koppelmodul ist dabei um den Drehpunkt D2, der bevorzugt auf dem äußeren Drehteil 14 liegt, drehbar.

Gezeigt sind jeweils die bevorzugten Ausgestaltungen sowohl des inneren Koppelmoduls 181 als auch des äußeren Koppelmoduls 180 als zweiseitiger Hebel. Dabei weist das innere Koppelmodul 181 einen ersten Hebelarm L4 und einen zweiten Hebelarm L3 auf. Das äußere Koppelmodul 180 weist einen ersten Hebelarm L6 und einen zweiten Hebelarm L5 auf. Bevorzugt sind dabei jeweils die Massenverteilungen der beiden Hebelarme so gewählt, dass sich die Drehmomente der beiden Hebelseiten im Gleichgewicht befinden. Das Gewicht des inneren Koppellagers 183 kann dabei massenspezifisch dem ersten Hebelarm L4 des inneren Koppelmoduls 181 oder aber auch dem ersten Hebelarm L6 des äußeren Koppelmoduls 180 zugerechnet werden. Denkbar wäre auch, jeweils nur einen Teil des Gewichts, beispielsweise die Hälfte, dem ersten Hebelarm L4 des inneren Koppelmoduls 181 und den anderen Teil dem ersten Hebelarm L6 des äußeren Koppelmoduls 180 zuzurechnen. Mit den Bezugszeichen G1 und G2 sind jeweils Gegengewichte gekennzeichnet, die auf den zweiten Hebelarmen L3 und L5 aufgebracht werden können, um Massen auszugleichen, beispielsweise die Masse des inneren Koppellagers 183 bzw. Lagerbolzen und Lagerbüchse hiervon. Damit wird bevorzugt ein Gleichgewicht des Drehmoments auf beiden Seiten des Hebels erreicht.

Das Bezugszeichen G3 kennzeichnet ein weiteres Gegengewicht. Dieses gleicht die Masse des äußeren Koppelmoduls aus. Bevorzugt ist dieses diametral gegenüberliegend zum Drehpunkt D2 des äußeren Koppelmoduls 180 (am äußeren Drehteil 14) angeordnet und ist besonders bevorzugt vom Betrag genauso hoch wie das Gewicht des äußeren Koppelmoduls 180.

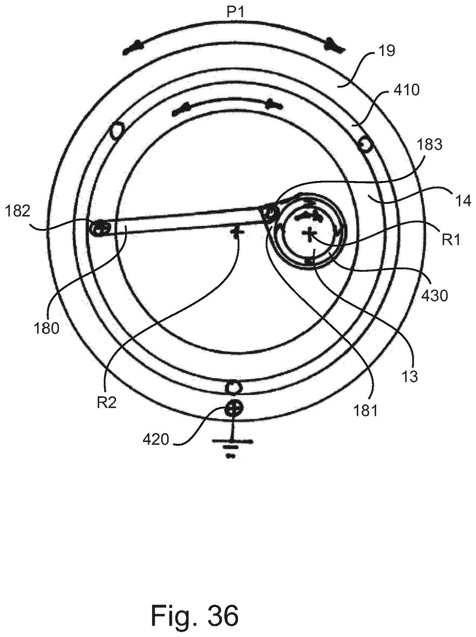

Fig. 36 zeigt eine schematische Querschnittsdarstellung einer Ausführungsform eines stufenlosen Getriebes. Dabei ist das äußere Drehteil 14 gezeigt, welche über eine Drehentkopplung 410, beispielsweise ein Dünnringlager, in einem Gehäuse 19, dem Schwenkgehäuse, eingebracht ist. Das äußere Drehteil 14 kann um das Rotationszentrum R2 rotieren und ist außerdem zusammen mit dem Schwenkgehäuse 19 um den ortsfest gelagerten Schwenkpunkt 420 entlang der durch den Pfeil P1 veranschaulichten Schwenkrichtung verschwenkbar.

Das innere Drehteil 13 ist dagegen bevorzugt ortsfest aber drehbar um das Rotationszentrum R1 des inneren Drehteils 13 gelagert. Das innere Koppelmodul 181 einer Koppelmechanik 18 ist über eine Kupplung 430 an das inneren Drehteil 13 koppelbar, es kann sich allerdings auch im Freilauf um das innere Drehteil 13 befinden. Das innere Koppelmodul 181 ist über das innere Koppellager 183, welches als die erste Lagerstelle bezeichnet wird, an dem äußeren Koppelmodul 180 (drehbar) gelagert. Diese Lagerung kann über einen Lagerbolzen realisiert sein. Das äußere Koppelmodul 180 ist schließlich über das äußere Koppellager 182 (zweite Lagerstelle), bevorzugt über einen Lagerbolzen, an dem äußeren Drehteil 14 angeordnet bzw. gelagert.

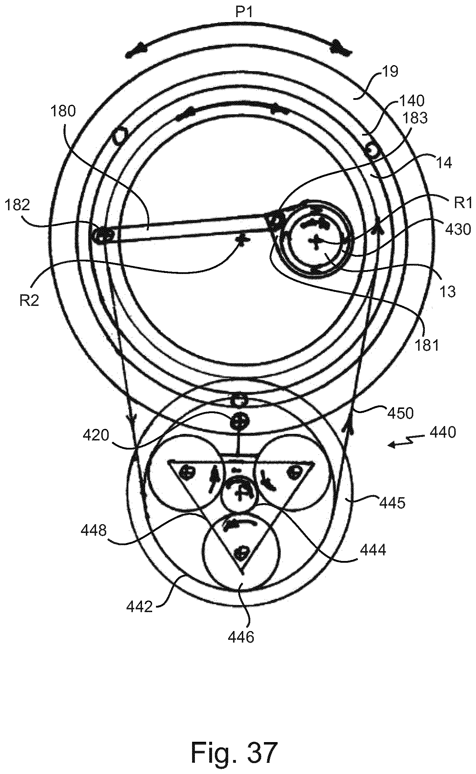

Fig. 37 zeigt schließlich eine Übersetzung einer Rotationsbewegung des äußeren Drehteils 14 über ein Planetenradgetriebe 440 in eine Rotationsbewegung einer Abtriebswelle des stufenlosen Getriebes. Das Planetenradgetriebe 440 weist dabei ein Sonnenrad 444, Planetenräder 446 und ein Hohlrad 442 auf. Die Abtriebswelle ist bevorzugt an dem Planetenträger 448, an welchem die Planetenräder 446 angeordnet sind, angeordnet.

An dem Sonnenrad ist bevorzugt ein weiteres Zahnrad 445, welches bevorzugt einen größeren Durchmesser als das Sonnenrad aufweist, fest (mechanisch verbunden) angeordnet, wobei dieses Zahnrad 445 im Eingriff mit einer Verzahnung des äußeren Drehteils 14 ist. Das Hohlrad 442 weist eine Innenverzahnung auf, welche im Eingriff mit den Planetenrädern 446 ist. Angetrieben wird das Hohlrad bevorzugt über einen Zahnriemen 450, Keilriemen 450, eine Kette 450, Zahnkette 450, welche die Drehbewegung des äußeren Drehteils auf das Hohlrad überträgt.

Alle zuvor beschriebenen Ausgestaltungen des stufenlosen Getriebes 10 können einzeln oder in allen möglichen Kombinationen Verwendung finden. Insbesondere können die Merkmale der zuvor beschriebenen Ausführungsbeispiele beliebig kombiniert oder bei Bedarf weggelassen werden. Zusätzlich sind insbesondere folgende Modifikationen denkbar. Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.
Das innere Drehteil 13 kann als Antrieb oder Abtrieb Verwendung finden. Demzufolge kann auch das äußere Drehteil 14 als Abtrieb oder Antrieb Verwendung finden.

Für jedes Teil des stufenlosen Getriebes 10 besteht die Möglichkeit, alle Arten von Stählen, Beschichtungen, Hartmetallen, Verbundwerkstoffen, Kohle-Glasfasern usw. einzusetzen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Stufenloses Getriebe (10) mit einem äußeren Drehteil (14),
einem inneren Drehteil (13), das in dem äußeren Drehteil (14) derart angeordnet ist, dass das innere und/oder das äußere Drehteil (13, 14) relativ zueinander drehbar sind,
mehreren Koppelmechaniken (18) zur Kopplung des inneren und äußeren Drehteils (13, 14) miteinander,
einer Verstelleinrichtung zur exzentrischen Verstellung des inneren und äußeren Drehteils (13, 14) relativ zueinander,
**dadurch gekennzeichnet, dass**
das stufenlose Getriebe (10) mindestens eine erste Schmierstoffführungseinrichtung (220) zum Führen wenigstens eines Teils eines Schmierstoffs von der Mantelfläche des inneren Drehteils (13) zu einem in Bezug auf die Drehachse des inneren Drehteils (13) radial weiter außen liegenden Bereich einer Koppelmechanik (18), aufweist und dass ein Schmierstoffstrom in axialer Richtung entlang der Mantelfläche des inneren Drehteils (13) besteht, durch welchen eine Schmierstoffversorgung zwischen dem inneren Drehteil (13) und den Koppelmechaniken (18) vorgesehen ist.

2. Stufenloses Getriebe (10) nach Anspruch 1, wobei das stufenlose Getriebe (10) eine Pumpe (30) zum Fördern eines Schmierstoffs in das Getriebe (10) entlang einer Mantelfläche des inneren Drehteils (13) aufweist.

3. Stufenloses Getriebe (10) nach mindestens einem der vorhergehenden Ansprüche, wobei das stufenlose Getriebe (10) Dichtelemente, die an dem inneren Drehteil (13) bei den Koppelmechaniken (18) angeordnet sind, oder Düsen zum Fördern einer vorbestimmten Menge an Schmierstoff an die jeweilige Koppelmechanik (18) aufweist.

4. Stufenloses Getriebe (10) nach wenigstens einem der vorhergehenden Ansprüche, wobei das äußere Drehteil (14) Scheiben (142) oder zwei aneinander befestigte Hülsen (150, 151) aufweist, welche durch Lagerbolzen (144) für die Koppelmechaniken (18) beabstandet sind.

5. Stufenloses Getriebe (10) nach wenigstens einem der vorangehenden Ansprüche, wobei eine der Koppelmechaniken (18) aufweist:
ein inneres Koppelmodul (181), welches an dem inneren Drehteil (13) angeordnet ist, und ein äußeres Koppelmodul (180), welches an dem äußeren Drehteil (14) angeordnet ist, wobei bevorzugt das äußere und innere Koppelmodul (180, 181) um einen Winkel gegeneinander verschwenkbar sind und dieser Winkel kleiner als 180° ist.

6. Stufenloses Getriebe (10) nach Anspruch 5,
**dadurch gekennzeichnet, dass**
das innere Koppelmodul (181) einen Masseausgleichsbolzen (181A) zum Ausgleich einer Masse eines Lagerbolzens (181E) mindestens eines Koppelmoduls (180, 181) aufweist, mit welchem Lagerbolzen (181E) das innere und äußere Koppelmodul (181, 180) dreh/schwenkbar aneinander befestigt sind.

7. Stufenloses Getriebe (10) nach wenigstens einem der Ansprüche 5 oder 6, wobei das innere Koppelmodul mindestens einen Schlitz aufweist zur Aufnahme von mit Vorspannung laminierend aufgewickelten Carbonfasern (181D).

8. Stufenloses Getriebe (10) nach wenigstens einem der vorhergehenden Ansprüche, wobei ein unteres Ende eines Klemmkörperelements (31A) konkav ausgebildet ist, wobei der Klemmkörper (31A) zur Lagerung einer der Koppelmechaniken (18) an dem inneren Drehteil (13) dient.

9. Stufenloses Getriebe (10) nach wenigstens einem der vorhergehenden Ansprüche, wobei eine Lagerstelle (21) für ein Verstellelement (15) der Verstelleinrichtung in axialer Richtung mittig an einem Lager- und Führungsmodul (12) angeordnet ist, welches zur Lagerung des äußeren Drehteils (14) dient.

10. Stufenloses Getriebe (10) nach wenigstens einem der vorangehenden Ansprüchen, **dadurch gekennzeichnet, dass**
die Exzentrizität des äußeren Drehteils (14) relativ zum inneren Drehteil (13) mit der Verstelleinrichtung mit Anschlägen begrenzt ist und/oder die Exzentrizität der Koppelmechanik (18) zwischen einem Gehäuse (19) und einem Lager- und Führungsmodul (12), welches zur Lagerung des äußeren Drehteils (14) dient, mit Anschlägen begrenzt ist.

## Claims

1. Continuously variable transmission (10), comprising an outer rotary part (14),
an inner rotary part (13) which is arranged in the outer rotary part (14) in such a way that the inner and/or the outer rotary part (13, 14) are rotatable relative to one another,
a plurality of coupling mechanisms (18) for coupling the inner and outer rotary part (13, 14) to one another,
an adjustment device for eccentric adjustment of the inner and outer rotary part (13, 14) relative to one another,
**characterised in that**
the continuously variable transmission (10) has at least one first lubricant guiding device (220) for guiding at least part of a lubricant from the peripheral surface of the inner rotary part (13) to a region of a coupling mechanism (18) located radially further outwards with respect to the axis of rotation of the inner rotary part (13), and **in that** a lubricant stream exists in the axial direction along the peripheral surface of the inner rotary part (13), by which a lubricant supply is provided between the inner rotary part (13) and the coupling mechanisms (18).

2. Continuously variable transmission (10) according to claim 1, wherein the continuously variable transmission (10) has a pump (30) for delivering a lubricant into the transmission (10) along a peripheral surface of the inner rotary part (13).

3. Continuously variable transmission (10) according to at least one of the preceding claims, wherein the continuously variable transmission (10) has sealing elements which are arranged on the inner rotary part (13) in the coupling mechanisms (18), or nozzles for delivering a predetermined amount of lubricant to the particular coupling mechanism (18).

4. Continuously variable transmission (10) according to at least one of the preceding claims, wherein the outer rotary part (14) has discs (142) or two casings (150, 151) which are fastened to one another and are spaced apart by bearing bolts (144) for the coupling mechanisms (18).

5. Continuously variable transmission (10) according to at least one of the preceding claims, wherein one of the coupling mechanisms (18) has:
an inner coupling module (181) which is arranged on the inner rotary part (13) and an outer coupling module (180) which is arranged on the outer rotary part (14), wherein the outer and inner coupling module (180, 181) is preferably pivotable around an angle relative to one another and this angle is smaller than 180°.

6. Continuously variable transmission (10) according to claim 5,
**characterised in that**
the inner coupling module (181) has a mass balancing bolt (181A) for balancing a mass of a bearing bolt (181E) of at least one coupling module (180, 181), by which bearing bolt (181E) the inner and outer coupling modules (181, 180) are fastened to one another rotatably/pivotably.

7. Continuously variable transmission (10) according to at least one of claims 5 or 6, wherein the inner coupling module has at least one slot for receiving carbon fibres (181D) wound by lamination with pretension.

8. Continuously variable transmission (10) according to at least one of the preceding claims, wherein a lower end of a sprag element (31A) is concave, wherein the sprag (31A) serves to support one of the coupling mechanisms (18) on the inner rotary part (13).

9. Continuously variable transmission (10) according to at least one of the preceding claims, wherein a bearing point (21) for an adjusting element (15) of the adjustment device is arranged centrally on a bearing and guiding module (12) in the axial direction which serves to support the outer rotary part (14).

10. Continuously variable transmission (10) according to at least one of the preceding claims,
**characterised in that**
the eccentricity of the outer rotary part (14) relative to the inner rotary part (13) is limited by the adjustment device with stops and/or the eccentricity of the coupling mechanism (18) between a housing (19) and a bearing and guiding module (12) which serves to support the outer rotary part (14) is limited by stops.

## Revendications

1. Transmission à variation continue (10) avec une partie rotative extérieure (14),
une partie rotative intérieure (13), qui est disposée dans la partie rotative extérieure (14) de telle sorte que la partie rotative intérieure et/ou la partie rotative extérieure (13, 14) peuvent tourner l'une par rapport à l'autre, plusieurs mécanismes d'accouplement (18) pour l'accouplement des parties rotatives intérieure et extérieure (13, 14) l'une à l'autre,
un dispositif de déplacement pour le déplacement excentrique des parties rotatives intérieure et extérieure (13, 14) l'une par rapport à l'autre,
**caractérisée en ce que**
la transmission à variation continue (10) présente au moins un premier dispositif d'acheminement de lubrifiant (220) pour l'acheminement d'au moins une partie d'un lubrifiant de la surface extérieure de la partie rotative intérieure (13) à une zone, située radialement davantage à l'extérieur par rapport à l'axe de rotation de la partie rotative intérieure (13), d'un mécanisme d'accouplement (18), et qu'un flux de lubrifiant est présent dans la direction axiale le long de la surface extérieure de la partie rotative intérieure (13), par lequel une alimentation en lubrifiant entre la partie rotative intérieure (13) et les mécanismes d'accouplement (18) est prévue.

2. Transmission à variation continue (10) selon la revendication 1, dans laquelle la transmission à variation continue (10) présente une pompe (30) pour le refoulement d'un lubrifiant dans la transmission (10) le long d'une surface extérieure de la partie rotative intérieure (13).

3. Transmission à variation continue (10) selon au moins l'une des revendications précédentes, dans laquelle la transmission à variation continue (10) présente des éléments d'étanchéité, qui sont disposés sur la partie rotative intérieure (13) près des mécanismes d'accouplement (18), ou des buses pour le refoulement d'une quantité prédéfinie de lubrifiant sur le mécanisme d'accouplement (18) respectif.

4. Transmission à variation continue (10) selon au moins l'une des revendications précédentes, dans laquelle la partie rotative extérieure (14) présente des disques (142) ou deux manchons (150, 151) fixés l'un sur l'autre, lesquels sont espacés par des axes de palier (144) pour les mécanismes d'accouplement (18).

5. Transmission à variation continue (10) selon au moins l'une des revendications précédentes, dans laquelle un des mécanismes d'accouplement (18) présente :
un module d'accouplement intérieur (181), lequel est disposé sur la partie rotative intérieure (13), et un module d'accouplement extérieur (180), lequel est disposé sur la partie rotative extérieure (14), dans laquelle de préférence les modules d'accouplement extérieur et intérieur (180, 181) peuvent pivoter l'un par rapport à l'autre selon un angle et cet angle est inférieur à 180°.

6. Transmission à variation continue (10) selon la revendication 5,
**caractérisée en ce que**
le module d'accouplement intérieur (181) présente un axe de compensation de masse (181A) pour la compensation d'une masse d'un axe de palier (181E) d'au moins un module d'accouplement (180, 181), axe de palier (181E) avec lequel les modules d'accouplement intérieur et extérieur (181, 180) sont fixés l'un sur l'autre de manière rotative/pivotante.

7. Transmission à variation continue (10) selon au moins l'une des revendications 5 ou 6, dans laquelle le module d'accouplement intérieur présente au moins une fente pour la réception de fibres de carbone (181D) enroulées de manière laminée avec précontrainte.

8. Transmission à variation continue (10) selon au moins l'une des revendications précédentes, dans laquelle une extrémité inférieure d'un élément de corps de serrage (31A) est réalisée de manière concave, dans laquelle le corps de serrage (31A) sert au support d'un des mécanismes d'accouplement (18) sur la partie rotative intérieure (13).

9. Transmission à variation continue (10) selon au moins l'une des revendications précédentes, dans laquelle un point d'appui (21) pour un élément de déplacement (15) du dispositif de déplacement est disposé dans la direction axiale de manière centrale sur un module de support et de guidage (12), lequel sert au support de la partie rotative extérieure (14).

10. Transmission à variation continue (10) selon au moins l'une des revendications précédentes,
**caractérisée en ce que**
l'excentricité de la partie rotative extérieure (14) par rapport à la partie rotative intérieure (13) avec le dispositif de déplacement est limitée avec des butées et/ou l'excentricité du mécanisme d'accouplement (18) entre un carter (19) et un module de support et de guidage (12), lequel sert au support de la partie rotative extérieure (14), est limitée avec des butées.
